# EUROPÄISCHE PATENTSCHRIFT

(11) **EP 3 011 196 B1**
(45) Veröffentlichungstag und Bekanntmachung des Hinweises auf die Patenterteilung: **17.04.2019**
(21) Anmeldenummer: 14744764.3
(22) Anmeldetag: 13.06.2014
(51) Int. Cl.: F16H 61/02

(54) **GETRIEBEVORRICHTUNG FÜR EIN KRAFTFAHRZEUG**
TRANSMISSION DEVICE FOR A MOTOR VEHICLE
DISPOSITIF DE TRANSMISSION POUR VÉHICULE AUTOMOBILE

(30) Priorität: 22.06.2013 DE 102013010523; 11.07.2013 DE 102013011553; 11.07.2013 DE 102013011555; 11.07.2013 DE 102013011567; 11.07.2013 DE 102013011566
(43) Veröffentlichungstag der Anmeldung: 27.04.2016
(73) Patentinhaber: Daimler AG, 70327 Stuttgart (DE)
(72) Erfinder: BRANDENBURG, Markus, 73730 Esslingen (DE); HÄRTER, Tobias, 70174 Stuttgart (DE); ROßMEIER, Markus, 74372 Sersheim (DE); TONIUS, Nils, 71384 Weinstadt (DE)
(74) Vertreter: JENSEN & SON
(86) Internationale Anmeldenummer: PCT/EP2014/001607
(87) Internationale Veröffentlichungsnummer: WO 2014/202195

(56) Entgegenhaltungen:
- CA-A- 493 060
- DE-A1-102010 002 747
- DE-A1-102011 017 695
- DE-A1-102011 076 368
- DE-A1-102011 084 587
- DE-A1-102011 108 024

## Beschreibung

Die Erfindung betrifft eine Getriebevorrichtung nach dem Oberbegriff des Anspruchs 1.

Aus der DE 10 2011 108 024 A1 ist bereits eine Getriebevorrichtung für ein Kraftfahrzeug, mit einer Kopplungseinheit, die zur drehfesten Verbindung zweier Kopplungselemente eine Reibschlusseinheit und eine parallel zur Reibschlusseinheit geschaltete Formschlusseinheit aufweist, mit einem ersten hydraulischen Aktor zur Betätigung der Formschlusseinheit, mit einem zweiten hydraulischen Aktor zur Betätigung der Reibschlusseinheit und mit einem Wegeventil zur Ansteuerung des ersten Aktors, bekannt.

Aus der gattungsgemäßen CA 493 060 A ist darüber hinaus bekannt, dass das Wegeventil einen Steuerleitungsanschluss aufweist, der in zumindest einem Betriebszustand drucktechnisch mit dem zur Betätigung der Reibschlusseinheit vorgesehenen zweiten Aktor verbunden ist

Der Erfindung liegt insbesondere die Aufgabe zugrunde, die Ansteuerung des ersten Aktors zu verbessern. Diese Aufgabe wird durch eine erfindungsgemäße Getriebevorrichtung entsprechend dem Anspruch 1 gelöst. Weiterbildungen der Erfindung ergeben sich aus den abhängigen Ansprüchen.

Die Erfindung geht aus von einer Getriebevorrichtung für ein Kraftfahrzeug, mit zumindest einer Kopplungseinheit, die zur drehfesten Verbindung zweier Kopplungselemente eine Reibschlusseinheit und eine parallel zur Reibschlusseinheit geschaltete Formschlusseinheit aufweist, mit einem ersten hydraulischen und/oder pneumatischen Aktor zur Betätigung der Formschlusseinheit, mit einem zweiten hydraulischen und/oder pneumatischen Aktor zur Betätigung der Reibschlusseinheit und mit einem Wegeventil zur Ansteuerung des zur Betätigung der Formschlusseinheit vorgesehenen ersten Aktors. Im Rahmen der Erfindung wird unter einer parallel zu einer Reibschlusseinheit geschalteten Formschlusseinheit eine im Kraftfluss zu einer Reibschlusseinheit parallel geschaltete Formschlusseinheit verstanden. Mit einer Kopplungseinheit, die zur drehfesten Verbindung zweier Kopplungselemente eine Reibschlusseinheit und eine parallel zur Reibschlusseinheit geschaltete Formschlusseinheit aufweist, sind die Kopplungselemente sowohl durch ein Schließen der Reibschlusseinheit als auch durch ein Schließen der Formschlusseinheit als auch durch ein Schließen der Reibschlusseinheit und der Formschlusseinheit drehfest verbindbar.

Weiterhin wird wird davon ausgegangen, dass das Wegeventil einen Steuerleitungsanschluss aufweist, der in zumindest einem Betriebszustand drucktechnisch mit dem zur Betätigung der Reibschlusseinheit vorgesehenen zweiten Aktor verbunden ist. Durch die drucktechnische Anbindung des Steuerleitungsanschlusses des Wegeventils an den zur Betätigung der Reibschlusseinheit vorgesehenen zweiten Aktor kann die Ansteuerung des zur Betätigung der Formschlusseinheit vorgesehenen ersten Aktors in Abhängigkeit der Betätigung der Reibschlusseinheit erfolgen, wodurch realisiert werden kann, dass die Formschlusseinheit erst bei geschlossener Reibschlusseinheit geschlossen wird. Dadurch kann verhindert werden, dass die Formschlusseinheit in einem unsynchronisierten Zustand geschlossen wird, wodurch die Formschlusseinheit komfortabel und verschleißarm geschlossen werden kann. Der zur Betätigung der Formschlusseinheit vorgesehene erste Aktor kann in Abhängigkeit eines zur Betätigung der parallel geschalteten Reibschlusseinheit vorgesehenen Lamellenbetätigungsdrucks angesteuert werden, wodurch besonders einfach ein zuverlässiges Kriterium für das Schließen der Formschlusseinheit bereitgestellt werden kann. Dadurch kann ein komfortables und verschleißarmes Schließen der Formschlusseinheit zuverlässig erfolgen, wodurch die Ansteuerung des zur Betätigung der Formschlusseinheit vorgesehenen ersten Aktors verbessert werden kann. Unter einer "Kopplungseinheit" soll insbesondere sowohl eine Kupplung als auch eine Bremse verstanden werden. Unter einer "Kupplung" soll insbesondere eine Einheit verstanden werden, die dazu vorgesehen ist, zwei drehbar angeordnete Kopplungselemente wahlweise drehfest miteinander zu verbinden oder voneinander zu trennen. Unter einer "Bremse" soll insbesondere eine Einheit verstanden werden, die dazu vorgesehen ist, ein drehbares Kopplungselement und ein feststehendes Kopplungselement, das vorzugsweise permanent drehfest mit einem feststehenden Bauteil verbunden oder einstückig mit diesem ausgebildet ist, wahlweise drehfest miteinander zu verbinden oder voneinander zu trennen. Das feststehende Bauteil ist vorteilhaft als ein Getriebegehäuse der Getriebevorrichtung ausgebildet. Unter einer "Reibschlusseinheit" soll insbesondere eine Einheit verstanden werden, die die drehfeste Verbindung im Wesentlichen durch einen Reibschluss herstellt, wie beispielsweise eine Lamellenkupplung oder eine Lamellenbremse. Unter einer "Formschlusseinheit" soll insbesondere eine Einheit verstanden werden, die die drehfeste Verbindung im Wesentlichen durch einen Formschluss herstellt, wie beispielsweise eine Klauenkupplung oder eine Klauenbremse. Die Reibschlusseinheit und die Formschlusseinheit sind vorzugsweise wirkungsmäßig zwischen den zwei Kopplungselementen angeordnet. Unter einem "Steuerleitungsanschluss" soll insbesondere ein hydraulischer oder pneumatischer Betriebsmittelanschluss verstanden werden, der zum Schalten des Wegeventils vorgesehen und/oder zur Betriebsmitteldruckbeaufschlagung eines Steuervolumens des Wegeventils drucktechnisch mit dem Steuervolumen verbunden ist. Ein Steuervolumen ist im Rahmen der Erfindung vorzugsweise als ein durch ein Ventilgehäuse des Wegeventils und eine Steuerfläche eines in dem Ventilgehäuse beweglichen Ventilschiebers des Wegeventils begrenztes Volumen zu verstehen. Ein in dem Steuervolumen herrschender Betriebsmitteldruck wirkt vorzugsweise auf die das Steuervolumen begrenzende Steuerfläche des Ventilschiebers, wodurch sich der Ventilschieber, bei entsprechender Betriebsmitteldruckbeaufschlagung in dem Ventilgehäuse, verschiebt. Unter einer "drucktechnischen Verbindung" soll insbesondere eine hydraulische oder pneumatische Verbindung zwischen zumindest zwei Verbindungspartnern verstanden werden, durch die an, in und/oder zwischen den Verbindungspartnern zumindest in einem hydrostatischen Betriebszustand ein zumindest im Wesentlichen gleicher Betriebsmitteldruck vorliegt. Unter "vorgesehen" soll insbesondere speziell ausgebildet, programmiert, ausgestattet, ausgelegt und/oder angeordnet verstanden werden. Der erfindungsgemäße Steuerleitungsanschluss, welcher in zumindest einem Betriebszustand drucktechnisch mit dem zur Betätigung der Reibschlusseinheit vorgesehenen zweiten Aktor verbunden ist, ist dazu vorgesehen, dass das Steuervolumen, welches drucktechnisch mit dem Steuerleitungsanschluss verbunden ist, mit dem Lamellenbetätigungsdruck beaufschlagbar ist. Der Lamellenbetätigungsdruck wirkt auf die das Steuervolumen begrenzende Steuerfläche für den Lamellenbetätigungsdruck des Ventilschiebers des Wegeventils.

Erfindungsgemäß wird vorgeschlagen, dass das Wegeventil einen zweiten Steuerleitungsanschluss aufweist, der in zumindest einem Betriebszustand drucktechnisch mit dem zur Betätigung der Formschlusseinheit vorgesehenen ersten Aktor verbunden ist. Dadurch kann ein zur Betätigung der Formschlusseinheit vorgesehener Klauenbetätigungsdruck und der zur Betätigung der parallel geschalteten Reibschlusseinheit vorgesehene Lamellenbetätigungsdruck zur Ansteuerung des Wegeventils genutzt werden, wodurch die Ansteuerung des ersten Aktors optimiert werden kann. Die Steuerleitungsanschlüsse des Wegeventils sind vorzugsweise jeweils einem Steuervolumen zugeordnet, und zur Betriebsmitteldruckbeaufschlagung von jeweils einem Steuervolumen vorgesehen, wobei die Steuervolumina drucktechnisch voneinander getrennt sind. Der erfindungsgemäße zweite Steuerleitungsanschluss, welcher in zumindest einem Betriebszustand drucktechnisch mit dem zur Betätigung der Formschlusseinheit vorgesehenen ersten Aktor verbunden ist, ist dazu vorgesehen, dass das Steuervolumen, welches drucktechnisch mit dem zweiten Steuerleitungsanschluss verbunden ist, mit dem Klauenbetätigungsdruck beaufschlagbar ist. Der Klauenbetätigungsdruck wirkt auf die das Steuervolumen, welches drucktechnisch mit dem zweiten Steuerleitungsanschluss verbunden ist, begrenzende Steuerfläche des Ventilschiebers des Wegeventils.

In einer weiteren Ausgestaltung der Erfindung ist es vorteilhaft, wenn das Wegeventil einen Ventilschieber mit zwei, jeweils einem der Steuerleitungsanschlüsse zugeordneten Steuerflächen aufweist, wobei die Steuerflächen in dieselbe Richtung orientiert sind. Dadurch kann bei geschlossener Formschlusseinheit eine durch den zur Betätigung der Reibschlusseinheit vorgesehenen Lamellenbetätigungsdruck eingestellte Ventilstellung des Wegeventils durch den zur Betätigung der Formschlusseinheit vorgesehenen Klauenbetätigungsdruck aufrechterhalten werden, und der Lamellenbetätigungsdruck kann, beispielsweise zum Auflösen einer Zahn-auf-Zahn-Stellung in der Formschlusseinheit, gesenkt werden, ohne dass das Wegeventil die durch den Lamellenbetätigungsdruck eingestellte Ventilstellung verlässt. Grundsätzlich kann dadurch vorteilhaft auch realisiert werden, dass der Klauenbetätigungsdruck zum Halten der durch den Lamellenbetätigungsdruck eingestellten Ventilstellung genutzt wird, wodurch die Reibschlusseinheit nach dem Schließen der Formschlusseinheit geöffnet werden kann. Unter einer "einem Steuerleitungsanschluss zugeordneten Steuerfläche" soll insbesondere eine Steuerfläche verstanden werden, die ein Steuervolumen begrenzt, welches zur Betriebsmitteldruckbeaufschlagung drucktechnisch mit dem Steuerleitungsanschluss verbunden ist, wodurch vorzugsweise ein an dem Steuerleitungsanschluss anliegender Betriebsmitteldruck in dem Steuervolumen herrscht und damit auf die Steuerfläche einwirkt. Unter "Steuerflächen, die in dieselbe Richtung orientiert sind" soll insbesondere verstanden werden, dass Flächennormalen der einen Steuerfläche und Flächennormalen der anderen Steuerfläche in dieselbe Richtung gerichtet sind. Die in dieselbe Richtung orientierten Steuerflächen sind bei einer Betriebsmitteldruckeinwirkung vorzugsweise zur Ventilschieberbewegung für eine Einstellung derselben Ventilstellung des Wegeventils vorgesehen. Eine Betriebsmitteldruckbeaufschlagung von Steuervolumina, die Steuerflächen zugeordnet sind, die in dieselbe Richtung orientiert sind, bewirkt eine Bewegung des Ventilschiebers in dieselbe Richtung. Unter einer "Flächennormale" soll insbesondere ein Richtungsvektor verstanden werden, der orthogonal auf einer Fläche angeordnet und von dieser weggerichtet ist.

In einer weiteren Ausgestaltung der Erfindung weist das Wegeventil zumindest einen dritten Steuerleitungsanschluss und der Ventilschieber eine dem dritten Steuerleitungsanschluss zugeordnete Steuerfläche auf, die zu den weiteren Steuerflächen des Ventilschiebers in die entgegengesetzte Richtung orientiert ist. Durch den bei dieser Ausgestaltung der Erfindung zusätzlich vorgesehenen dritten Steuerleitungsanschluss mit der dem dritten Steuerleitungsanschluss zugeordneten Steuerfläche ist der Ventilschieber des Wegeventils vorteilhaft mit einem zusätzlich dritten Steuerdruck beaufschlagbar und die Ventilstellung ist in Abhängigkeit von dem dritten Steuerdruck einstellbar. Insbesondere bei einer Getriebevorrichtung mit einer weiteren Kopplungseinheit, die ebenfalls durch das Wegeventil angesteuert wird, können bei Getriebegangschaltungen durch die mögliche Beaufschlagung des Ventilschiebers des Wegeventils mit einem dritten Steuerdruck Konflikte für die Ansteuerung der weiteren Kopplungseinheit durch das Wegeventil vermieden werden, wodurch besonders komfortable Getriebegangschaltungen realisiert werden können. Die weitere Kopplungseinheit, die ebenfalls durch das Wegeventil angesteuert wird, wird im Rahmen der Erfindung als zweite weitere Kopplungseinheit bezeichnet. Es können durch die mögliche Beaufschlagung des Ventilschiebers des Wegeventils mit einem dritten Steuerdruck Konflikte für die Ansteuerung der zweiten weiteren Kopplungseinheit bei einer Getriebegangschaltung aus einem Istgang, in dem die Kopplungseinheit geschlossenen ist, in einen Zielgang, in dem die zweite weitere Kopplungseinheit geschlossenen ist, vermieden werden. Ferner kann mit einer Betriebsmitteldruckbeaufschlagung der dritten Steuerfläche über den dritten Steuerleitungsanschluss eine Feder des Wegeventils unterstützt werden, wodurch die Feder vorteilhaft auf kleine Federkräfte ausgelegt werden kann. Unter einer Steuerfläche, "die zu den weiteren Steuerflächen in entgegengesetzte Richtung orientiert ist" soll insbesondere verstanden werden, dass Flächennormalen der Steuerfläche und Flächennormalen der weiteren Steuerflächen in entgegengesetzte Richtungen zueinander gerichtet sind. Die in entgegengesetzte Richtungen orientierten Steuerflächen sind bei einer Betriebsmitteldruckeinwirkung vorzugsweise zur Ventilschieberbewegung für eine Einstellung von entgegengesetzten Ventilstellungen des Wegeventils vorgesehen.

In einer weiteren Ausgestaltung der Erfindung weist die Getriebevorrichtung ein Magnetventil und einen dritten Aktor zur Betätigung einer ersten weiteren Kopplungseinheit auf, wobei die erste weitere Kopplungseinheit in zumindest einem Betriebszustand drucktechnisch mit dem dritten Steuerleitungsanschluss verbunden ist, wodurch ein zur Betätigung der dritten Kopplungseinheit vorgesehener Betriebsmitteldruck als dritter Steuerdruck für eine Einstellung des Wegeventils genutzt werden kann. Darunter, dass ein "Magnetventil einen ... Aktor zur Betätigung einer.. Kopplungseinheit" aufweist, wird im Rahmen der Erfindung verstanden, dass ein Magnetventil einen Aktor steuert und der Aktor dann entsprechend den Steuerungsvorgaben durch das Magnetventil die Kopplungseinheit betätigt. Das Vorsehen des dritten Steuerleitungsanschlusses, welcher mit dem dritten Aktor zur Betätigung der ersten weiteren Kopplungseinheit drucktechnisch verbunden ist, ermöglicht vorteilhaft eine Einstellbarkeit einer Betriebsmitteldruckbeaufschlagung des dritten Steuerleitungsanschlusses über das Magnetventil, welches für eine Betriebsmitteldruckeinstellung im dritten Aktor zur Betätigung einer ersten weiteren Kopplungseinheit der Getriebevorrichtung vorgesehen ist. Vorteilhaft ist der von dem Magnetventil eingestellte Betriebsmitteldruck so nicht nur für die Betätigung der ersten weiteren Kopplungseinheit, sondern zusätzlich auch für eine Ansteuerung der Formschlusseinheit nutzbar. Erfindungsgemäß wirkt auf den Ventilschieber des Wegeventils der zur Betätigung der Reibschlusseinheit vorgesehene Lamellenbetätigungsdrucks als ein Steuerdruck, der zur Betätigung der Formschlusseinheit vorgesehene Klauenbetätigungsdruck als zweiter Steuerdruck und der zur Betätigung der ersten weiteren Kopplungseinheit vorgesehene Betriebsmitteldruck als dritter Steuerdruck. Vorteilhaft ist dabei das erfindungsgemäße Wegeventil so ausgebildet, dass am Ventilschieber des Wegeventils der zur Betätigung der ersten weiteren Kopplungseinheit vorgesehene Betriebsmitteldruck dem zur Betätigung der Formschlusseinheit vorgesehenen Klauenbetätigungsdruck und dem zur Betätigung der parallel geschalteten Reibschlusseinheit vorgesehenen Lamellenbetätigungsdruck entgegenwirkt.

In einer weiteren erfindungsgemäßen Ausgestaltung weist das Wegeventil zumindest eine Feder auf, deren Federkraft in die gleiche Richtung orientiert ist, wie die Steuerfläche, die dem dritten Steuerleitungsanschluss des Ventilschiebers zugeordnet ist. Ist in der erfindungsgemäßen Getriebevorrichtung das Magnetventil und der dritte Aktor zur Betätigung der ersten weiteren Kopplungseinheit vorgesehen, wobei die erste weitere Kopplungseinheit in zumindest einem Betriebszustand drucktechnisch mit dem dritten Steuerleitungsanschluss verbunden ist, und wirken der zur Betätigung der ersten weiteren Kopplungseinheit vorgesehene Betriebsmitteldruck und die Federkraft dem zur Betätigung der Formschlusseinheit vorgesehenen Klauenbetätigungsdruck und dem zur Betätigung der parallel geschalteten Reibschlusseinheit vorgesehenen Lamellenbetätigungsdruck entgegen, so kann vorteilhaft ein Ausmaß von Quereinflüssen auf das weitere Steuerungssystem der Getriebevorrichtung, die von einer Ansteuerung des Wegeventils herrühren, klein gehalten werden, was für ein Ausführungsbeispiel der Erfindung näher erläutert wird.

In einer weiteren Ausgestaltung der Erfindung ist die erste weitere Kopplungseinheit in einem vierten, fünften, sechsten, siebten, achten und neunten Vorwärtsgetriebegang geschlossen und die Kopplungseinheit in dem achten Vorwärtsgetriebegang, in dem neunten Vorwärtsgetriebegang und in einem Rückwärtsgetriebegang geschlossen. Ist in der Getriebevorrichtung nach dieser Ausgestaltung der Erfindung das Magnetventil und der dritte Aktor zur Betätigung der ersten weiteren Kopplungseinheit vorgesehen, wobei die erste weitere Kopplungseinheit in zumindest einem Betriebszustand drucktechnisch mit dem dritten Steuerleitungsanschluss verbunden ist, und wirken der zur Betätigung der ersten weiteren Kopplungseinheit vorgesehene Betriebsmitteldruck und die Federkraft dem zur Betätigung der Formschlusseinheit vorgesehenen Klauenbetätigungsdruck und dem zur Betätigung der parallel geschalteten Reibschlusseinheit vorgesehenen Lamellenbetätigungsdruck entgegen, so ist vorteilhaft eine Ansteuerung der Formschlusseinheit mit dem erfindungsgemäßen Wegeventil im Rückwärtsgang steuerungstechnisch einfach. Bei der Getriebevorrichtung nach dieser Ausgestaltung der Erfindung ist im Rückwärtsgang das Steuervolumen des Wegeventils, welches von der Steuerfläche begrenzt wird, die dem dritten Steuerleitungsanschluss zugeordnet ist, drucklos.

In einer weiteren Ausgestaltung der Erfindung weist die Getriebevorrichtung ein Arbeitsdrucksystem auf, das in zumindest einem Betriebszustand drucktechnisch mit dem dritten Steuerleitungsanschluss verbunden ist. Dadurch kann das Wegeventil in Abhängigkeit des Arbeitsdrucks geschaltet werden, wodurch der zur Betätigung der Formschlusseinheit vorgesehene erste Aktor in Abhängigkeit des Arbeitsdrucks, des Lamellenbetätigungsdrucks und des Klauenbetätigungsdrucks angesteuert werden kann. Auf den Ventilschieber wirkt damit erfindungsgemäß als ein Steuerdruck der zur Betätigung der Reibschlusseinheit vorgesehene Lamellenbetätigungsdruck, als zweiter Steuerdruck der zur Betätigung der Formschlusseinheit vorgesehene Klauenbetätigungsdruck und als dritter Steuerdruck der Arbeitsdruck. Vorteilhaft wirkt dabei der Arbeitsdruck dem zur Betätigung der Formschlusseinheit vorgesehenen Klauenbetätigungsdruck und dem zur Betätigung der parallel geschalteten Reibschlusseinheit vorgesehenen Lamellenbetätigungsdruck entgegen. Im Rahmen der Erfindung ist unter dem Arbeitsdrucksystem das Betriebsmitteldrucksystem für die Getriebevorrichtung zu verstehen, welches für eine Ansteuerung der Kopplungseinheiten der Getriebevorrichtung vorgesehen ist. Dabei ist die Höhe des Arbeitsdrucks des Arbeitsdrucksystems mit dem erforderlichen Druck bemessen, welcher für ein Geschlossenhalten der Kopplungseinheiten bei maximalen Drehmomentanforderungen erforderlich ist.

Des Weiteren wird vorgeschlagen, dass das Wegeventil zumindest eine Feder aufweist, deren Federkraft in die entgegengesetzte Richtung orientiert ist, wie die Steuerfläche des Ventilschiebers, die dem dritten Steuerleitungsanschluss zugeordnet ist. Insbesondere kann dadurch die Feder den zur Betätigung der Reibschlusseinheit vorgesehenen Lamellenbetätigungsdruck und/oder den zur Betätigung der Formschlusseinheit vorgesehenen Klauenbetätigungsdruck zur Ventilschieberbewegung gegen den Arbeitsdruck unterstützen, wodurch realisiert werden kann, dass die Feder das Wegeventil in eine ausgewählte Ventilstellung schaltet, wenn der Lamellenbetätigungsdruck und/oder der Klauenbetätigungsdruck gleich ist wie der Arbeitsdruck. Die Steuerfläche und die Feder, deren Federkraft hinsichtlich der Schaltrichtung zur Steuerfläche, die dem dritten Steuerleitungsanschluss zugeordnet ist, entgegengerichtet ist, sind vorzugsweise zur Ventilschieberbewegung in entgegengesetzte Richtungen vorgesehen. Die Feder, deren Federkraft hinsichtlich der Schaltrichtung zur Steuerfläche, die dem dritten Steuerleitungsanschluss zugeordnet ist, entgegengerichtet ist, und der auf die Steuerfläche einwirkende Betriebsmitteldruck wirken zur Ventilschieberbewegung vorzugsweise in entgegengesetzte Ventilstellungen. Erfindungsgemäß wirkt damit der Arbeitsdruck dem zur Betätigung der Formschlusseinheit vorgesehenem Klauenbetätigungsdruck, dem zur Betätigung der parallel geschalteten Reibschlusseinheit vorgesehenen Lamellenbetätigungsdruck sowie der Federkraft entgegen.

Ferner wird vorgeschlagen, dass die Getriebevorrichtung ein weiteres Magnetventil und einen vierten Aktor zur Betätigung einer zweiten weiteren Kopplungseinheit aufweist, wobei das Wegeventil einen ersten Arbeitsleitungsanschluss, mit dem der erste Aktor verbunden ist, und einen zweiten Arbeitsleitungsanschluss, mit dem der vierte Aktor verbunden ist, aufweist. Dadurch kann das weitere Magnetventil sowohl für eine Betätigung der Formschlusseinheit als auch für eine Betätigung der zweiten weiteren Kopplungseinheit genutzt werden, wodurch eine Anzahl von Magnetventilen und damit eine Komplexität in der Getriebevorrichtung gering gehalten werden kann. Unter einem "Arbeitsleitungsanschluss" soll insbesondere ein hydraulischer oder pneumatischer Anschluss verstanden werden, der zur Betriebsmittelversorgung zumindest eines Bauteils der Getriebevorrichtung oder des Kraftfahrzeugs, insbesondere einer Kopplungseinheit der Getriebevorrichtung vorgesehen ist, vorzugsweise um diese zu betätigen, zu kühlen und/oder zu schmieren.
Bei dieser Ausgestaltung der Erfindung kann eine eingestellte Ventilstellung des Wegeventils, in der das weitere Magnetventil mit dem ersten Aktor zur Betätigung der Formschlusseinheit verbunden ist, lediglich mit dem zur Betätigung der Formschlusseinheit vorgesehenen Klauenbetätigungsdruck aufrechterhalten werden, so dass der Lamellenbetätigungsdruck, beispielsweise zum Auflösen einer Zahn-auf-Zahn-Stellung der Formschlusseinheit, gesenkt werden kann, ohne dass das Wegeventil die eingestellte Ventilstellung verlässt. Damit kann eine Zahn-auf-Zahn-Stellung der Formschlusseinheit vorteilhaft auch bei dieser Ausgestaltung der Erfindung gelöst werden.

In einer weiteren Ausgestaltung der Erfindung weist die Getriebevorrichtung ein Umschaltventil auf, das dazu vorgesehen ist, den zur Verbindung mit dem zweiten Aktor vorgesehenen Steuerleitungsanschluss drucktechnisch mit dem ersten Aktor zu verbinden. Vorteilhaft kann durch das Vorsehen des Umschaltventils das Vorsehen einer Steuerfläche am Ventilschieber, die nur dem zweiten Steuerleitungsanschluss zugeordnet ist, vermieden werden, wodurch ein konstruktiv einfaches und produktionstechnisch kostengünstiges Wegeventil ohne einen gestuften Ventilschieber vorgesehen werden.

Grundsätzlich kann bei Vorhandensein lediglich eines für den ersten Aktor und den zweiten Aktor vorgesehenen Steuerleitungsanschlusses dadurch auch realisiert werden, dass der Klauenbetätigungsdruck zum Halten der durch den Lamellenbetätigungsdruck eingestellten Ventilstellung genutzt wird, wodurch die Reibschlusseinheit nach dem Schließen der Formschlusseinheit geöffnet werden kann.

Weitere Vorteile ergeben sich aus der folgenden Figurenbeschreibung. In den Figuren sind drei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
Fig. 1 schematisch eine Getriebevorrichtung für ein Kraftfahrzeug, die eine kombinierte Kopplungseinheit mit einer Reibschlusseinheit und einer Formschlusseinheit aufweist,
Fig. 2 ein Schaltschema der Getriebevorrichtung,
Fig. 3 die kombinierte Kopplungseinheit mit einem ersten Aktor zur Betätigung der Formschlusseinheit und einem zweiten Aktor zur Betätigung der Reibschlusseinheit,
Fig. 4 eine Betätigung der Aktoren schematisch dargestellt,
Fig. 5 eine alternativ ausgebildete Betätigung der Aktoren und
Fig. 6 ein drittes nicht beanspruchtes Ausführungsbeispiel einer Betätigung der Aktoren.

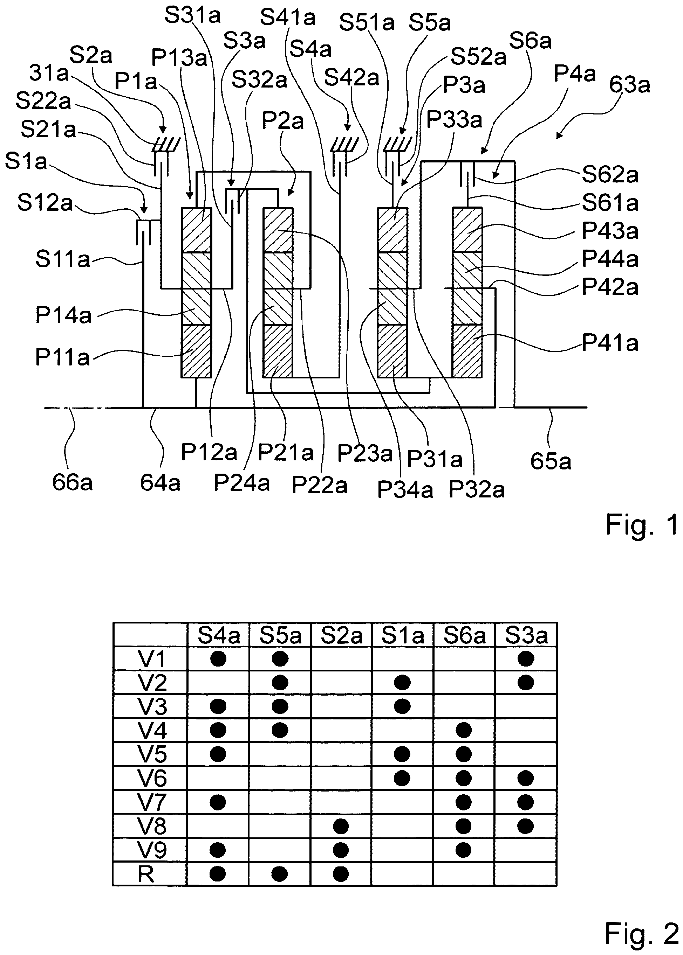

Figur 1 zeigt teilweise eine Getriebevorrichtung eines Kraftfahrzeugs, die einen Teil eines Kraftfahrzeugantriebsstrangs bildet. Die Getriebevorrichtung ist für ein Automatikgetriebe vorgesehen. Das die Getriebevorrichtung aufweisende Kraftfahrzeug weist einen nicht näher dargestellten Verbrennungsmotor zum Antrieb des Kraftfahrzeugs und nicht näher dargestellte Antriebsräder auf. Zur Einstellung von zehn Getriebegängen V1-V9, R weist die Getriebevorrichtung einen Getrieberadsatz 63a auf. Der Getrieberadsatz 63a ist dabei in einem Kraftfluss zwischen dem Verbrennungsmotor und den Antriebsrädern angeordnet.

Der Getrieberadsatz 63a weist neun Vorwärtsgetriebegänge V1-V9 und einen Rückwärtsgetriebegang R auf. Die Vorwärtsgetriebegänge V1-V9 weisen aufeinanderfolgende Übersetzungsverhältnisse auf. Dabei weist der erste Vorwärtsgetriebegang V1 das größte Übersetzungsverhältnis und der letzte, in diesem Ausführungsbeispiel neunte Vorwärtsgetriebegang V9, das kleinste Übersetzungsverhältnis auf, wobei die Übersetzungsverhältnisse vom niedrigen zum hohen Vorwärtsgetriebegang V1-V9 abnehmen. Der Rückwärtsgetriebegang R weist im Vergleich zu den Vorwärtsgetriebegängen V1-V9 eine Drehrichtungsumkehr auf. Der Getrieberadsatz 63a kann mit einem Hybridantriebsmodul verbunden werden, mittels dem ein Antriebsmoment verändert werden kann. Weiter kann mittels des Hybridantriebsmoduls und dem Getrieberadsatz 63a ein CVT realisiert werden, wodurch das Übersetzungsverhältnis zumindest in Teilbereichen stufenlos eingestellt werden kann. Die Getriebevorrichtung ist als eine Mehrstufengetriebevorrichtung ausgebildet.

Die Getriebevorrichtung weist weiter ein Getriebegehäuse 31a auf, das ortsfest angeordnet ist. Der Getrieberadsatz 63a ist innerhalb des Getriebegehäuses 31a angeordnet.

Zur Einleitung eines von dem Verbrennungsmotor bereitgestellten Antriebsmoments in den Getrieberadsatz 63a weist die Getriebevorrichtung eine Getriebeeingangswelle 64a auf. Die Getriebeeingangswelle 64a ist in einem von dem Verbrennungsmotor ausgehenden Kraftfluss nach dem Antriebsmotor und vor dem Getrieberadsatz 63a angeordnet. Der Getriebeeingangswelle 64a kann ein nicht näher dargestelltes Modul vorgeschaltet sein, das insbesondere eine Anfahrfunktionalität bereitstellt. Als ein vorgeschaltetes Modul ist beispielsweise ein Drehmomentwandler oder eine nasse Anfahrkupplung denkbar. Grundsätzlich kann das zum Anfahren vorgesehene Modul aber auch in den Getrieberadsatz 63a integriert sein.

Zur Ausleitung eines übersetzten Antriebsmoments weist die Getriebevorrichtung eine Getriebeausgangswelle 65a auf. Die Getriebeausgangswelle 65a ist in dem von dem Verbrennungsmotor ausgehenden Kraftfluss nach dem Getrieberadsatz 63a und vor den Antriebsrädern angeordnet. Der Getriebeausgangswelle 65a kann ein nicht näher dargestelltes Modul nachgeschaltet sein, mittels dem das aus dem Getrieberadsatz 63a ausgeleitete Antriebsmoment auf die Antriebsräder verteilt werden kann, wie beispielsweise ein Planetenradgetriebe, das für einen Drehzahlausgleich zwischen den Antriebsrädern vorgesehen ist, oder eine Allradantriebseinheit, die das Antriebsmoment auf zwei verschiedene Antriebsachsen verteilt. Die Getriebeeingangswelle 64a und die Getriebeausgangswelle 65a können grundsätzlich beliebig zueinander angeordnet sein.

Der Getrieberadsatz 63a weist vier Planetenradstufen P1a, P2a, P3a, P4a auf, die zur Schaltung der Getriebegänge V1-V9, R wirkungsmäßig miteinander verbunden sind. Die erste Planetenradstufe P1a, die zweite Planetenradstufe P2a, die dritte Planetenradstufe P3a und die vierte Planetenradstufe P4a sind hintereinander entlang einer Hauptrotationsachse 66a angeordnet. Eine Rotationsachse der Getriebeeingangswelle 64a fällt mit der Hauptrotationsachse 66a zusammen. Sämtliche Planetenradstufen P1a, P2a, P3a, P4a des Getrieberadsatzes 63a weisen einen Einfachplanetenradsatz auf. Die Bezeichnungen "erste", "zweite", "dritte" und "vierte" kennzeichnen eine axiale Reihenfolge der Planetenradstufen P1a, P2a, P3a, P4a ausgehend von dem Verbrennungsmotor. Demnach ist die erste Planetenradstufe P1a im Vergleich zu den anderen Planetenradstufen P2a, P3a, P4a an erster axialer Position, die zweite Planetenradstufe P2a im Vergleich zu den anderen Planetenradstufen P1a, P3a, P4a an zweiter axialer Position, die dritte Planetenradstufe P3a im Vergleich zu den anderen Planetenradstufen P1a, P2a, P4a an dritter axialer Position und die vierte Planetenradstufe P4a im Vergleich zu den anderen Planetenradstufen P1a, P2a, P3a an vierter axialer Position angeordnet.

Im Folgenden werden die vier Planetenradstufen P1a, P2a, P3a, P4a näher beschrieben. Die vier Planetenradstufen P1a, P2a, P3a, P4a weisen jeweils ein Sonnenrad, einen Planetenradträger und ein Hohlrad auf. Dabei sollen zur Vereinfachung unter einem "ersten bis vierten Planetenradträger", einem "ersten bis vierten Sonnenrad" und einem "ersten bis vierten Hohlrad" ein der ersten bis vierten Planetenradstufe P1a, P2a, P3a, P4a zugeordneter Planetenradträger bzw. ein Sonnenrad oder ein Hohlrad verstanden werden, d.h. beispielsweise, dass unter dem ersten Planetenradträger ein Planetenradträger der ers ten Planetenradstufe P1a verstanden werden soll.

Die erste Planetenradstufe P1a ist eingangsseitig angeordnet. Die erste Planetenradstufe P1a umfasst ein erstes Sonnenrad P11a, ein erstes Hohlrad P13a und einen ersten Planetenradträger P12a. Der erste Planetenradträger P12a führt Planetenräder P14a der ersten Planetenradstufe P1a auf einer Kreisbahn. Die Planetenräder P14a kämmen mit dem ersten Sonnenrad P11a und mit dem ersten Hohlrad P13a. Die Planetenräder P14a sind drehbar auf dem ersten Planetenradträger P12a gelagert.

Die zweite Planetenradstufe P2a ist mittig eingangsseitig angeordnet. Die zweite Planetenradstufe P2a umfasst ein zweites Sonnenrad P21a, ein zweites Hohlrad P23a und einen zweiten Planetenradträger P22a. Der zweite Planetenradträger P22a führt Planetenräder P24a der zweiten Planetenradstufe P2a auf einer Kreisbahn. Die Planetenräder P24a kämmen mit dem zweiten Sonnenrad P21a und mit dem zweiten Hohlrad P23a. Die Planetenräder P24a sind drehbar auf dem zweiten Planetenradträger P22a gelagert.

Die dritte Planetenradstufe P3a ist mittig ausgangsseitig angeordnet. Die dritte Planetenradstufe P3a umfasst ein drittes Sonnenrad P31a, ein drittes Hohlrad P33a und einen dritten Planetenradträger P32a. Der dritte Planetenradträger P32a führt Planetenräder P34a der dritten Planetenradstufe P3a auf einer Kreisbahn. Die Planetenräder P34a kämmen mit dem dritten Sonnenrad P31a und mit dem dritten Hohlrad P33a. Die Planetenräder P34a sind drehbar auf dem dritten Planetenradträger P32a gelagert.

Die vierte Planetenradstufe P4a ist ausgangsseitig angeordnet. Die vierte Planetenradstufe P4a umfasst ein viertes Sonnenrad P41a, ein viertes Hohlrad P43a und einen vierten Planetenradträger P42a. Der vierte Planetenradträger P42a führt Planetenräder P44a der vierten Planetenradstufe P4a auf einer Kreisbahn. Die Planetenräder P44a kämmen mit dem vierten Sonnenrad P41a und mit dem vierten Hohlrad P43a. Die Planetenräder P44a sind drehbar auf dem vierten Planetenradträger P42a gelagert.

Das erste Hohlrad P13a ist permanent drehfest mit dem zweiten Planetenradträger P22a verbunden. Das zweite Hohlrad P23a ist permanent drehfest mit dem dritten Sonnenrad P31a und permanent drehfest mit dem vierten Sonnenrad P41a verbunden. Das dritte Sonnenrad P31a und das vierte Sonnenrad P41a sind permanent drehfest miteinander verbunden. Zur Einleitung des von dem Verbrennungsmotor bereitgestellten Antriebsmoments ist die erste Planetenradstufe P1a und die vierte Planetenradstufe P4a jeweils als eine Eingangsstufe ausgebildet. Zur Ausbildung der erste Planetenradstufe P1a als Eingangsstufe ist das erste Sonnenrad P11a permanent drehfest mit der Getriebeeingangswelle 64a verbunden. Zur Ausbildung der vierten Planetenradstufe P4a als Eingangsstufe ist der vierte Planetenradträger P42a permanent drehfest mit der Getriebeeingangswelle 64a verbunden. Zur Ausleitung des von dem Getrieberadsatz 63a übersetzten Antriebsmoments ist die dritte Planetenradstufe P3a und die vierte Planetenradstufe P4a jeweils als eine Ausgangsstufe ausgebildet. Zur Ausbildung der dritten Planetenradstufe P3a als Ausgangsstufe ist der dritte Planetenradträger P32a permanent drehfest mit der Getriebeausgangswelle 65a verbunden. Zur Ausbildung der vierten Planetenradstufe P4a als Ausgangsstufe ist das vierte Hohlrad P43a drehfest mit der Getriebeausgangswelle 65a verbindbar.

Zur Schaltung der Getriebegänge V1-V9, R weist die Getriebevorrichtung sechs Kopplungseinheiten S1a, S2a, S3a, S4a, S5a, S6a auf. Die Kopplungseinheiten S1a, S2a, S3a, S4a, S5a, S6a sind jeweils als eine Schalteinheit ausgebildet, die zur Schaltung der Getriebegänge V1-V9, R vorgesehen sind. Die Kopplungseinheiten S1a, S2a, S3a, S4a, S5a, S6a sind dazu vorgesehen, entweder wahlweise zwei drehbare Getriebeelemente drehfest miteinander zu verbinden und voneinander zu trennen oder wahlweise ein drehbares Getriebeelement drehfest mit dem Getriebegehäuse 31a zu verbinden oder von diesem zu trennen. Ein Getriebeelement ist dabei ein Sonnenrad P11a, P21a, P31a, P41a, ein Planetenradträger P12a, P22a, P32a, P42a oder ein Hohlrad P13a, P23a, P33a, P43a.

Die drei Kopplungseinheiten S1a, S3a, S6a sind jeweils als eine Kupplung ausgebildet. Sie weisen jeweils ein erstes drehbares Kopplungselement S11a, S31a, S61a und ein zweites drehbares Kopplungselement S12a, S32a, S62a auf. Die drei Kopplungseinheiten S1a, S3a, S6a sind jeweils dazu vorgesehen, ihre beiden drehbaren Kopplungselemente S11a, S12a, S31a, S32a, S61a, S62a drehfest miteinander zu verbinden.

Die drei Kopplungseinheiten S2a, S4a, S5a sind jeweils als eine Bremse ausgebildet. Sie weisen jeweils ein drehbares Kopplungselement S21a, S41a, S51a und ein feststehendes, gehäusefestes Kopplungselement S22a, S42a, S52a auf. Die Kopplungseinheiten S2a, S4a, S5a sind jeweils dazu vorgesehen, ihr drehbares Kopplungselement S21a, S41a, S51a und ihr feststehendes Kopplungselement S22a, S42a, S52a drehfest miteinander zu verbinden. Sie sind jeweils dazu vorgesehen, ihr drehbares Kopplungselement S21a, S41a, S51a gehäusefest und damit drehfest mit dem Getriebegehäuse 31a zu verbinden.

Die erste Kopplungseinheit S1a weist das erste drehbare Kopplungselement S11a und das zweite drehbare Kopplungselement S12a auf. Das erste drehbare Kopplungselement S11a der ersten Kopplungseinheit S1a ist permanent drehfest mit der Getriebeeingangswelle 64a verbunden. Das zweite drehbare Kopplungselement S12a der ersten Kopplungseinheit S1a ist permanent drehfest mit dem drehbaren Kopplungselement S21a der zweiten Kopplungseinheit S2a verbunden. Das zweite drehbare Kopplungselement S12a der ersten Kopplungseinheit S1a ist weiter permanent drehfest mit dem ersten Planetenradträger P12a verbunden. Die erste Kopplungseinheit S1a ist dazu vorgesehen, den ersten Planetenradträger P12a drehfest mit der Getriebeeingangswelle 64a zu verbinden. Die Kopplungseinheit S1a weist zur drehfesten Verbindung der drehbaren Kopplungselemente S11a, S12a lediglich eine Reibschlusseinheit 38a auf. Die Kopplungseinheit S1a ist als eine Lamellenkupplung ausgebildet. Die Reibschlusseinheit 38a umfasst zur drehfesten Verbindung der Kopplungselemente S11a, S12a ein Lamellenpaket.

Die zweite Kopplungseinheit S2a weist das drehbare Kopplungselement S21a und das feststehende Kopplungselement S22a auf. Das drehbare Kopplungselement S21a der zweiten Kopplungseinheit S2a ist permanent drehfest mit dem ersten Planetenradträger P12a verbunden. Ferner ist das drehbare Kopplungselement S21a der zweiten Kopplungseinheit S2a permanent drehfest mit dem ersten drehbaren Kopplungselement S31a der dritten Kopplungseinheit S3a verbunden. Das feststehende Kopplungselement S22a der zweiten Kopplungseinheit S2a ist permanent drehfest mit dem Getriebegehäuse 31a verbunden. Das feststehende Kopplungselement S22a der zweiten Kopplungseinheit S2a ist einstückig mit dem Getriebegehäuse 31a ausgebildet. Die Kopplungseinheit S2a ist dazu vorgesehen, ihr drehbares Kopplungselement S21a und ihr feststehendes Kopplungselement S22a drehfest miteinander zu verbinden. Die zweite Kopplungseinheit S2a ist dazu vorgesehen, den ersten Planetenradträger P12a gehäusefest zu verbinden.

Die dritte Kopplungseinheit S3a weist das erste drehbare Kopplungselement S31a und das zweite drehbare Kopplungselement S32a auf. Das erste drehbare Kopplungselement S31a der dritten Kopplungseinheit S3a ist permanent drehfest mit dem ersten Planetenradträger P12a verbunden. Das zweite drehbare Kopplungselement S32a der dritten Kopplungseinheit S3a ist permanent drehfest mit dem zweiten Hohlrad P23a verbunden.

Das zweite drehbare Kopplungselement S32a der dritten Kopplungseinheit S3a ist weiter permanent drehfest mit dem dritten Sonnenrad P31a und permanent drehfest mit dem vierten Sonnenrad P41a verbunden. Die dritte Kopplungseinheit S3a ist dazu vorgesehen, den ersten Planetenradträger P12a, das zweite Hohlrad P23a, das dritte Sonnenrad P31a und das vierte Sonnenrad P41a drehfest miteinander zu verbinden. Die Kopplungseinheit S3a ist als eine Lamellenkupplung ausgebildet. Sie weist lediglich eine Reibschlusseinheit auf, die zur drehfesten Verbindung der Kopplungselemente S31a, S32a ein Lamellenpaket umfasst.

Die vierte Kopplungseinheit S4a weist das drehbare Kopplungselement S41a und das feststehende Kopplungselement S42a auf. Das drehbare Kopplungselement S41a der vierten Kopplungseinheit S4a ist permanent drehfest mit dem zweiten Sonnenrad P21a verbunden. Das feststehende Kopplungselement S42a der vierten Kopplungseinheit S4a ist permanent drehfest mit dem Getriebegehäuse 31a verbunden. Die vierte Kopplungseinheit S4a ist dazu vorgesehen, das zweite Sonnenrad P21a gehäusefest zu verbinden. Die Kopplungseinheit S4a ist als eine Lamellenbremse ausgebildet. Sie weist lediglich eine Reibschlusseinheit auf, die zur drehfesten Verbindung der Kopplungselemente S41a, S42a ein Lamellenpaket umfasst.

Die fünfte Kopplungseinheit S5a weist das drehbare Kopplungselement S51a und das feststehende Kopplungselement S52a auf. Das drehbare Kopplungselement S51a der fünften Kopplungseinheit S5a ist permanent drehfest mit dem dritten Hohlrad P33a verbunden. Das feststehende Kopplungselement S52a der fünften Kopplungseinheit S5a ist permanent drehfest mit dem Getriebegehäuse 31a verbunden Die fünfte Kopplungseinheit S5a ist dazu vorgesehen, das dritte Hohlrad P33a gehäusefest zu verbinden. Die Kopplungseinheit S5a ist als eine Lamellenbremse ausgebildet. Sie weist lediglich eine Reibschlusseinheit auf, die zur drehfesten Verbindung der Kopplungselemente S51a, S52a ein Lamellenpaket umfasst.

Die sechste Kopplungseinheit S6a weist das erste drehbare Kopplungselement S61a und das zweite drehbare Kopplungselement S62a auf. Das erste drehbare Kopplungselement S61a der sechsten Kopplungseinheit S6a ist permanent drehfest mit dem vierten Hohlrad P43a verbunden. Das zweite drehbare Kopplungselement S62a der sechsten Kopplungseinheit S6a ist permanent drehfest mit dem dritten Planetenradträger P32a verbunden. Das zweite drehbare Kopplungselement S62a der sechsten Kopplungseinheit S6a ist weiter permanent drehfest mit der Getriebeausgangswelle 65a verbunden. Die sechste Kopplungseinheit S6a ist dazu vorgesehen, das vierte Hohlrad P43a, den dritten Planetenradträger P32a und die Getriebeausgangswelle 65a drehfest miteinander zu verbinden. Die Kopplungseinheit S6a weist zur drehfesten Verbindung der drehbaren Kopplungselemente S61a, S62a lediglich eine Reibschlusseinheit 37a auf. Die Kopplungseinheit S6a ist als eine Lamellenkupplung ausgebildet. Die Reibschlusseinheit 37a umfasst zur drehfesten Verbindung der Kopplungselemente S61a, S62a ein Lamellenpaket.

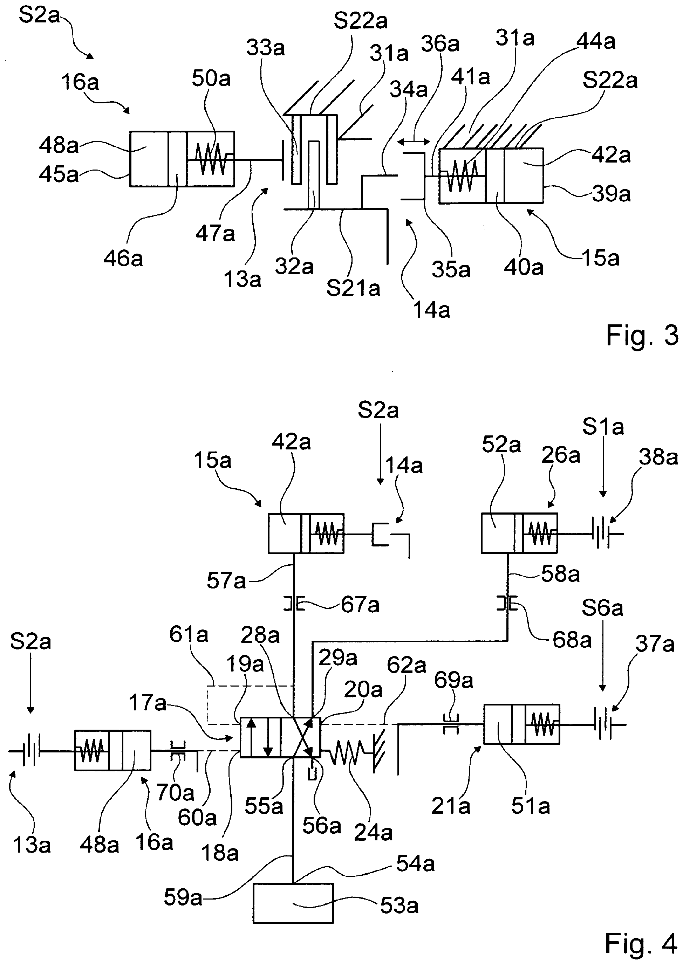

Die zweite Kopplungseinheit S2a ist kombiniert ausgebildet (vgl. Fig. 3). Die zweite Kopplungseinheit S2a weist eine Reibschlusseinheit 13a und eine im Kraftfluss parallel zur Reibschlusseinheit 13a geschaltete Formschlusseinheit 14a auf. Die Reibschlusseinheit 13a und die parallel geschaltete Formschlusseinheit 14a sind jeweils dazu vorgesehen, das drehbare Kopplungselement S21a der zweiten Kopplungseinheit S2a gehäusefest und damit drehfest mit dem Getriebegehäuse 31a zu verbinden. Die zweite Kopplungseinheit S2a ist der ersten Planetenradstufe P1a zugeordnet. Die Reibschlusseinheit 13a und die Formschlusseinheit 14a der zweiten Kopplungseinheit S2a sind jeweils wirkungsmäßig zwischen dem drehbaren Kopplungselement S21a und dem Getriebegehäuse 31a angeordnet.

Die Reibschlusseinheit 13a der kombinierten Kopplungseinheit S2a ist als eine Lamellenbremse ausgebildet. Sie ist dazu vorgesehen, die Kopplungselemente S21a, S22a reibschlüssig miteinander zu verbinden. Die Reibschlusseinheit 13a umfasst zur drehfesten Verbindung der Kopplungselemente S21a, S22a ein Lamellenpaket. Die Reibschlusseinheit 13a umfasst erste Reibschlusselemente 32a und zweite Reibschlusselemente 33a. Die ersten Reibschlusselemente 32a sind permanent drehfest mit dem drehbaren Kopplungselement S21a der kombinierten Kopplungseinheit S2a verbunden. Die ersten Reibschlusselemente 32a sind als Innenlamellen ausgebildet. Die zweiten Reibschlusselemente 33a sind permanent drehfest mit dem feststehenden Kopplungselement S22a verbunden. Sie sind damit permanent drehfest mit dem Getriebegehäuse 31a verbunden. Dabei sind die zweiten Reibschlusselemente 33a axial verschiebbar zu dem feststehenden Kopplungselement S22a angeordnet. Die zweiten Reibschlusselemente 33a sind als Außenlamellen ausgebildet. Ferner weist die Reibschlusseinheit 13a der kombinierten Kopplungseinheit S2a einen Außenlamellenträger, der permanent drehfest mit dem Getriebegehäuse 31a verbunden ist, und einen Innenlamellenträger, der permanent drehfest mit dem drehbaren Kopplungselement S21a verbunden ist, auf.

Die Formschlusseinheit 14a der kombinierten Kopplungseinheit S2a ist als eine Klauenbremse ausgebildet. Sie ist dazu vorgesehen, die Kopplungselemente S21a, S22a formschlüssig miteinander zu verbinden. Die Formschlusseinheit 14a umfasst ein erstes Formschlusselement 34a und ein zweites Formschlusselement 35a, die formschlüssig miteinander verbindbar sind. Das erste Formschlusselement 34a ist permanent drehfest mit dem drehbaren Kopplungselement S21a der kombinierten Kopplungseinheit S2a verbunden. Das erste Formschlusselement 34a ist permanent drehfest mit dem Innenlamellenträger der kombinierten Kopplungseinheit S2a verbunden. Die ersten Reibschlusselemente 32a der Reibschlusseinheit 13a und das erste Formschlusselement 34a der Formschlusseinheit 14a sind permanent drehfest miteinander verbunden. Das zweite Formschlusselement 35a ist permanent drehfest mit dem feststehenden Kopplungselement S22a verbunden. Es ist damit permanent drehfest mit dem Getriebegehäuse 31a verbunden. Die Formschlusselemente 34a, 35a sind entlang einer axialen Betätigungsrichtung 36a relativ zueinander verschiebbar angeordnet. Das zweite Formschlusselement 35a ist entlang der Betätigungsrichtung 36a relativ zum ersten Formschlusselement 34a und relativ zum Getriebegehäuse 31a axial verschiebbar angeordnet. Das zweite Formschlusselement 35a ist drehfest, aber axial verschiebbar mit dem feststehenden Kopplungselement S22a und damit mit dem Getriebegehäuse 31a verbunden. Die Betätigungsrichtung 36a ist parallel zu der Hauptrotationsachse 66a orientiert. Das erste Formschlusselement 34a und das zweite Formschlusselement 35a weisen zur formschlüssigen Verbindung jeweils eine Klauenverzahnung auf, die korrespondierend zueinander ausgebildet sind. Die Klauenverzahnungen können radial oder axial angeordnet sein.

Die Reibschlusseinheit 13a und die Formschlusseinheit 14a der kombinierten Kopplungseinheit S2a weisen jeweils ein Auslegungsmoment auf. Das Auslegungsmoment der Reibschlusseinheit 13a und das Auslegungsmoment der Formschlusseinheit 14a sind unterschiedlich. Das Auslegungsmoment der Reibschlusseinheit 13a ist kleiner als das Gesamtauslegungsmoment der kombinierten Kopplungseinheit S2a. Das Auslegungsmoment der Formschlusseinheit 14a entspricht dem Gesamtauslegungsmoment der kombinierten Kopplungseinheit S2a. Somit ist das Auslegungsmoment der Reibschlusseinheit 13a kleiner als das Auslegungsmoment der Formschlusseinheit 14a. Die Formschlusseinheit 14a ist im Vergleich zur Reibschlusseinheit 13a zur Übertragung von höheren Momenten ausgelegt. Die Reibschlusseinheit 13a der kombinierten Kopplungseinheit S2a weist im Vergleich zu den Reibschlusseinheiten 37a, 38a der anderen Kopplungseinheiten S6a, S1a die geringste Lamellenanzahl auf. Die Formschlusseinheit 14a der kombinierten Kopplungseinheit S2a dient als Drehmomentstütze für die Reibschlusseinheit 13a der kombinierten Kopplungseinheit S2a.

In der Figur 2 ist ein Schaltschema der Getriebevorrichtung dargestellt. In dem Schaltschema stellt ein schwarz ausgefüllter Kreis eine geschlossene und ein fehlender schwarz ausgefüllter Kreis eine geöffnete Kopplungseinheit S1a, S2a, S3a, S4a, S5, S6a in dem entsprechenden Getriebegang V1-V9, R dar. Die Bildung der Vorwärtsgetriebegänge V1-V9 und des Rückwärtsgetriebegangs R durch Schließen der Kopplungseinheiten S1a-S6a ist in dem Schaltschema in der Figur 2 dargestellt. Einem Fachmann ergibt sich aus dem Schaltschema in der Figur 2 in Verbindung mit dem Getriebeschema in der Figur 1 für jeden Getriebegang ein Leistungsfluss.

Die Kopplungseinheit S1a ist in dem zweiten Vorwärtsgetriebegang V2, in dem dritten Vorwärtsgetriebegang V3, in dem fünften Vorwärtsgetriebegang V5 und in dem sechsten Vorwärtsgetriebegang V6 geschlossen. Die Kopplungseinheit S2a ist in dem achten Vorwärtsgetriebegang V8, in dem neunten Vorwärtsgetriebegang V9 und in dem Rückwärtsgetriebegang R geschlossen. Die Kopplungseinheit S3a ist in dem ersten Vorwärtsgetriebegang V1, in dem zweiten Vorwärtsgetriebegang V2, in dem sechsten Vorwärtsgetriebegang V6, in dem siebten Vorwärtsgetriebegang V7 und in dem achten Vorwärtsgetriebegang V8 geschlossen. Die Kopplungseinheit S4a ist in dem ersten Vorwärtsgetriebegang V1, in dem dritten Vorwärtsgetriebegang V3, in dem vierten Vorwärtsgetriebegang V4, in dem fünften Vorwärtsgetriebegang V5, in dem siebten Vorwärtsgetriebegang V7, in dem neunten Vorwärtsgetriebegang V9 und in dem Rückwärtsgetriebegang R geschlossen. Die Kopplungseinheit S5a ist in dem ersten Vorwärtsgetriebegang V1, in dem zweiten Vorwärtsgetriebegang V2, in dem dritten Vorwärtsgetriebegang V3, in dem vierten Vorwärtsgetriebegang V4 und in dem Rückwärtsgetriebegang R geschlossen. Die Kopplungseinheit S6a ist in dem vierten Vorwärtsgetriebegang V4, in dem fünften Vorwärtsgetriebegang V5, in dem sechsten Vorwärtsgetriebegang V6, in dem siebten Vorwärtsgetriebegang V7, in dem achten Vorwärtsgetriebegang V8 und in dem neunten Vorwärtsgetriebegang V9 geschlossen.

Zur Betätigung der Reibschlusseinheit 13a der kombinierten Kopplungseinheit S2a und der Formschlusseinheit 14a der kombinierten Kopplungseinheit S2a weist die Getriebevorrichtung zwei voneinander unabhängige hydraulische Aktoren 15a, 16a auf. Die Reibschlusseinheit 13a und die Formschlusseinheit 14a werden nacheinander betätigt, wobei die Reibschlusseinheit 13a vor der Formschlusseinheit 14a greift. Die Formschlusseinheit 14a wird stets bei geschlossener Reibschlusseinheit 13a geschlossen.

Der erste Aktor 15a betätigt druckgesteuert die Formschlusseinheit 14a der kombinierten Kopplungseinheit S2. Der erste Aktor 15a ist innerhalb des Getriebegehäuses 31a angeordnet. Der erste Aktor 15a ist als eine Zylinder-Kolben-Einheit ausgebildet. Er weist einen Betätigungszylinder 39a, ein Kolbenelement 40a und ein Betätigungselement 41a auf. Das Kolbenelement 40a ist axial verschiebbar in dem Betätigungszylinder 39a angeordnet. Das Kolbenelement 40a ist fest mit dem Betätigungselement 41a verbunden. Sie sind einstückig miteinander ausgeführt. Das Kolbenelement 40a und das Betätigungselement 41a sind fest mit dem zweiten Formschlusselement 35a und axial verschiebbar, aber drehfest mit dem feststehenden Kopplungselement S22a und damit mit dem Getriebegehäuse 31a verbunden. Der Betätigungszylinder 39a ist fest mit dem Getriebegehäuse 31a verbunden. Zur formschlüssigen Verbindung der Kopplungselemente S21a, S22a der kombinierten Kopplungseinheit S2a bewegt sich das Betätigungselement 41a des ersten Aktors 15a und dadurch das zweite Formschlusselement 35a axial in Richtung des ersten Formschlusselements 34a, bis die korrespondierend zueinander ausgebildeten Klauenverzahnungen der Formschlusseinheit 14a formschlüssig ineinandergreifen und die Kopplungselemente S21a, S22a formschlüssig miteinander verbunden sind.

Der erste Aktor 15a weist weiter eine Druckkammer 42a auf. Die Druckkammer 42a ist zum Schließen der Formschlusseinheit 14a vorgesehen. Der erste Aktor 15a weist ferner eine weitere Kammer, in welcher eine Feder 44a angeordnet ist, auf. Das Kolbenelement 40a trennt die Druckkammer 42a und die weitere Kammer strömungstechnisch voneinander. Die Feder 44a ist wirkungsmäßig zwischen dem Betätigungszylinder 39a und dem Kolbenelement 40a angeordnet. Eine Federkraft der Feder 44a wirkt der durch einen hydraulischen Betriebsmitteldruck in der Druckkammer 42a erzeugbaren Kraft entgegen. Der in der Druckkammer 42a wirkende hydraulische Betriebsmitteldruck ist als ein Klauenbetätigungsdruck ausgebildet, welcher zum Schließen der Formschlusseinheit 14a vorgesehen ist. Die Feder 44a ist als eine Spiralfeder ausgebildet. Eine Ansteuerung des Aktors 15a ist zum Schließen der Formschlusseinheit 14a der kombinierten Kopplungseinheit S2a in den Vorwärtsgetriebegängen V8, V9 und in dem Rückwärtsgetriebegang R vorgesehen.

Der zweite Aktor 16a betätigt druckgesteuert die Reibschlusseinheit 13a der kombinierten Kopplungseinheit S2. Der zweite Aktor 16a ist innerhalb des Getriebegehäuses 31a angeordnet. Der zweite Aktor 16a ist analog zu dem ersten Aktor 15a ausgebildet, weswegen der zweite Aktor 16a nur kurz erläutert wird. Der zweite Aktor 16a weist einen Betätigungszylinder 45a, ein Kolbenelement 46a und ein Betätigungselement 47a auf. Zur reibschlüssigen Verbindung der Kopplungselemente S21a, S22a der kombinierten Kopplungseinheit S2a drückt das Betätigungselement 47a axial gegen das Lamellenpaket der Reibschlusseinheit 13a, wodurch sich die Lamellen des Lamellenpakets relativ zueinander axial verschieben bis diese aneinander liegen und die Kopplungselemente S21a, S22a reibschlüssig miteinander verbunden sind. Zum Schließen der Reibschlusseinheit 13a weist der zweite Aktor 16a eine Druckkammer 48a auf. Dabei weist der zweite Aktor 16a eine Feder 50a auf. Ein in der Druckkammer 48a wirkender hydraulischer Betriebsmitteldruck ist als ein Lamellenbetätigungsdruck ausgebildet, welcher zum Schließen der Reibschlusseinheit 13a vorgesehen ist. Die Druckkammer 42a des ersten Aktors 15a und die Druckkammer 48a des zweiten Aktors 16a sind bezüglich einer Betätigungsmittelversorgung unabhängig voneinander. Die Druckkammer 42a des ersten Aktors 15a und die Druckkammer 48a des zweiten Aktors 16a sind drucktechnisch voneinander getrennt. Eine Ansteuerung des Aktors 16a ist zum Schließen der Reibschlusseinheit 13a der kombinierten Kopplungseinheit S2a in den Vorwärtsgetriebegängen V8, V9 und in dem Rückwärtsgetriebegang R vorgesehen.

Zur Betätigung der Kopplungseinheit S6a weist die Getriebevorrichtung einen dritten hydraulischen Aktor 21a auf (vergl. Fig. 4). Der dritte Aktor 21a ist innerhalb des Getriebegehäuses 31a angeordnet. Der dritte Aktor 21a ist analog zu dem ersten Aktor 15a ausgebildet, weswegen der dritte Aktor 21a nur kurz erläutert wird. Der dritte Aktor 21a weist einen Betätigungszylinder, ein Kolbenelement und ein Betätigungselement auf. Zum Schließen der Kopplungseinheit S6a weist der dritte Aktor 21a eine Druckkammer 51a auf. Ein in der Druckkammer 51a wirkender hydraulischer Betriebsmitteldruck ist als ein Lamellenbetätigungsdruck ausgebildet, welcher zum Schließen der Reibschlusseinheit 37a vorgesehen ist. Eine Ansteuerung des Aktors 21a ist zum Schließen der Kopplungseinheit S6a in den Vorwärtsgetriebegängen V4, V5, V6, V7, V8, V9 vorgesehen.

Zur Betätigung der dritten Kopplungseinheit S1a weist die Getriebevorrichtung einen vierten hydraulischen Aktor 26a auf. Der vierte Aktor 26a ist innerhalb des Getriebegehäuses 31a angeordnet. Der vierte Aktor 26a ist analog zu dem ersten Aktor 15a ausgebildet, weswegen der vierte Aktor 26a nur kurz erläutert wird. Der vierte Aktor 26a weist einen Betätigungszylinder, ein Kolbenelement und ein Betätigungselement auf. Zum Schließen der Kopplungseinheit S1a weist der vierte Aktor 26a eine Druckkammer 52a auf. Ein in der Druckkammer 52a wirkender hydraulischer Betriebsmitteldruck ist als ein Lamellenbetätigungsdruck ausgebildet, welcher zum Schließen der Reibschlusseinheit 38a vorgesehen ist. Eine Ansteuerung des Aktors 26a ist zum Schließen der Kopplungseinheit S1a in den Vorwärtsgetriebegängen V2, V3, V5, V6 vorgesehen. Grundsätzlich können die Aktoren 15a, 16a, 21a, 26a auch pneumatisch ausgebildet sein.

Zur Einstellung des Betriebsmitteldrucks in der Druckkammer 42a des ersten Aktors 15a weist die Getriebevorrichtung ein erstes Magnetventil 53a auf. Das erste Magnetventil 53a ist zur Betriebsmittelversorgung der Druckkammer 42a des ersten Aktors 15a zum Aufbau des Betriebsmitteldrucks in der Druckkammer 42a vorgesehen. Das erste Magnetventil 53a ist zur Einstellung des Klauenbetätigungsdrucks zum Schließen der Formschlusseinheit 14a vorgesehen. Das erste Magnetventil 53a weist einen hydraulischen Betriebsmittelausgang 54a auf, der drucktechnisch an die Druckkammer 42a des ersten Aktors 15a anbindbar ist. Das erste Magnetventil 53a ist als ein Regelmagnetventil ausgebildet.

Zur Einstellung des Betriebsmitteldrucks in der Druckkammer 48a des zweiten Aktors 16a weist die Getriebevorrichtung ein nicht dargestelltes zweites Magnetventil auf. Das zweite Magnetventil ist zur Betriebsmittelversorgung der Druckkammer 48a des zweiten Aktors 16a zum Aufbau des Betriebsmitteldrucks in der Druckkammer 48a des zweiten Aktors 16a vorgesehen. Das zweite Magnetventil ist zur Einstellung des Lamellenbetätigungsdrucks zum Schließen der Reibschlusseinheit 13a vorgesehen. Das zweite Magnetventil ist drucktechnisch an die Druckkammer 48a des zweiten Aktors 16a angebunden. Das zweite Magnetventil bildet für den zweiten Aktor 16a eine Betriebsmitteldruckquelle. Das zweite Magnetventil ist als ein Regelmagnetventil ausgebildet.

Zur Einstellung des Betriebsmitteldrucks in der Druckkammer 51a des dritten Aktors 21a weist die Getriebevorrichtung ein nicht dargestelltes drittes Magnetventil auf. Das dritte Magnetventil ist zur Betriebsmittelversorgung der Druckkammer 51a des drittem Aktors 21a zum Aufbau des Betriebsmitteldrucks in der Druckkammer 51a des dritten Aktors 21a vorgesehen. Das dritte Magnetventil ist zur Einstellung des Lamellenbetätigungsdrucks zum Schließen der Reibschlusseinheit 37a vorgesehen. Das dritte Magnetventil ist drucktechnisch an die Druckkammer 51a des dritten Aktors 21a angebunden. Das dritte Magnetventil bildet für den dritten Aktor 21a eine Betriebsmitteldruckquelle. Das dritte Magnetventil ist als ein Regelmagnetventil ausgebildet.

Zur Einstellung des Betriebsmitteldrucks in der Druckkammer 52a des vierten Aktors 26a wird das erste Magnetventil 53a, das auch zur Einstellung des Betriebsmitteldrucks in der Druckkammer 42a des ersten Aktors 15a genutzt wird, genutzt. Das erste Magnetventil 53a ist ebenfalls zur Betriebsmittelversorgung der Druckkammer 52a des vierten Aktors 26a zum Aufbau des Betriebsmitteldrucks in der Druckkammer 52a des vierten Aktors 26a vorgesehen. Das erste Magnetventil 53a ist zur Einstellung des Lamellenbetätigungsdrucks zum Schließen der Reibschlusseinheit 38a der dritten Kopplungseinheit S1a vorgesehen. Das erste Magnetventil 53a ist damit zur Einstellung des Klauenbetätigungsdruck in der Druckkammer 42a des ersten Aktors 15a und zur Einstellung des Lamellenbetätigungsdrucks in der Druckkammer 52a des vierten Aktors 26a vorgesehen. Das erste Magnetventil 53a weist bezüglich der Einstellung des Betriebsmitteldrucks eine Doppelnutzung auf, durch die der erste Aktor 15a und der vierte Aktor 26a durch das erste Magnetventil 53a mit dem Betriebsmittel versorgt werden können. Das erste Magnetventil 53a bildet für den ersten Aktor 15a und für den vierten Aktor 26a eine Betriebsmitteldruckquelle. Durch die Doppelnutzung wird die Formschlusseinheit 14a ohne ein zusätzliches Magnetventil betätigt. Zur Betätigung der Formschlusseinheit 14a und der drei Reibschlusseinheiten 13a, 37a, 38a weist die Getriebevorrichtung lediglich drei Magnetventile 53a auf. Das Magnetventil 53a stellt damit einen Betriebsmitteldruck in den Vorwärtsgetriebegängen V2, V3, V5, V6, V8, V9 und in dem Rückwärtsgetriebegang R ein, wobei der Betriebsmitteldruck in den Vorwärtsgetriebegängen V2, V3, V5, V6 als der Lamellenbetätigungsdruck zum Schließen der Kopplungseinheit S1a und in den Vorwärtsgetriebegängen V8, V9 sowie in dem Rückwärtsgetriebegang R als der Klauenbetätigungsdruck zum Schließen der Kopplungseinheit S2a ausgebildet ist.

Zur Steuerung der Doppelnutzung des ersten Magnetventils 53a weist die Getriebevorrichtung ein Wegeventil 17a auf, das zur Ansteuerung des ersten Aktors 15a und zur Ansteuerung des vierten Aktors 26a vorgesehen ist. Das Wegeventil 17a steuert die Betriebsmittelversorgung der Druckkammer 42a des ersten Aktors 15a und die Betriebsmittelversorgung der Druckkammer 52a des vierten Aktors 26a. Es ist dazu vorgesehen, wahlweise die Druckkammer 42a des ersten Aktors 15a und die Druckkammer 52a des vierten Aktors 26a drucktechnisch mit dem ersten Magnetventil 53a zu verbinden. In den Vorwärtsgetriebegängen V2, V3, V5, V6 verbindet das Wegeventil 17a den für die Kopplungseinheit S1a vorgesehen Aktor 26a mit dem Magnetventil 53a und in den Vorwärtsgetriebegängen V8, V9 sowie in dem Rückwärtsgetriebegang R den für die Kopplungseinheit S2a vorgesehen Aktor 15a mit dem Magnetventil 53a.

Das Wegeventil 17a weist einen ersten hydraulischen Arbeitsleitungsanschluss 28a, einen zweiten hydraulischen Arbeitsleitungsanschluss 29a, einen hydraulischen Versorgungsleitungsanschluss 55a und einen hydraulischen Abflussanschluss 56a auf. Der erste Arbeitsleitungsanschluss 28a ist drucktechnisch an den zur Betätigung der Formschlusseinheit 14a vorgesehenen ersten Aktor 15a angebunden. Der erste Arbeitsleitungsanschluss 28a ist drucktechnisch an eine hydraulische Arbeitsleitung 57a der Getriebevorrichtung, die in die Druckkammer 42a des ersten Aktors 15a mündet, angebunden. Die Arbeitsleitung 57a verbindet die Druckkammer 42a des ersten Aktors 15a und den ersten Arbeitsleitungsanschluss 28a des Wegeventils 17a drucktechnisch miteinander. Der zweite Arbeitsleitungsanschluss 29a ist drucktechnisch an den zur Betätigung der dritten Kopplungseinheit S1a vorgesehenen vierten Aktor 26a angebunden. Der zweite Arbeitsleitungsanschluss 29a ist drucktechnisch an eine hydraulische Arbeitsleitung 58a der Getriebevorrichtung, die in die Druckkammer 52a des vierten Aktors 26a mündet, angebunden. Die Arbeitsleitung 58a verbindet die Druckkammer 52a des vierten Aktors 26a und den zweiten Arbeitsleitungsanschluss 29a des Wegeventils 17a drucktechnisch miteinander. Die Arbeitsleitungen 57a, 58a sind drucktechnisch voneinander getrennt.

Der Versorgungsleitungsanschluss 55a ist drucktechnisch an das erste Magnetventil 53a angebunden. Der Versorgungsleitungsanschluss 55a ist drucktechnisch an eine hydraulische Versorgungsleitung 59a der Getriebevorrichtung, die drucktechnisch an dem ersten Magnetventil 53a angebunden ist, angebunden. Die Versorgungsleitung 59a verbindet den Betriebsmittelausgang 54a des ersten Magnetventils 53a und den Versorgungsleitungsanschluss 55a des Wegeventils 17a drucktechnisch miteinander. In der Versorgungsleitung 59a und damit an dem Versorgungsleitungsanschluss 55a herrscht zumindest im Wesentlichen der durch das erste Magnetventil 53a eingestellte Betriebsmitteldruck. Das erste Magnetventil 53a ist mittels des Wegeventils 17a wahlweise an den ersten Aktor 15a und den vierten Aktor 26a anbindbar und von diesen trennbar. Der Abflussanschluss 56a mündet in ein druckloses Betriebsmittelreservoir.

Zur hydraulischen Ansteuerung weist das Wegeventil 17a drei hydraulische Steuerleitungsanschlüsse 18a, 19a, 20a auf. Der erste Steuerleitungsanschluss 18a ist zur hydraulischen Betätigung des Wegeventils 17a in eine Ventilstellung vorgesehen, in der der erste Aktor 15a drucktechnisch an das erste Magnetventil 53a angebunden ist. Der erste Steuerleitungsanschluss 18a des Wegeventils 17a ist drucktechnisch permanent mit dem zur Betätigung der Reibschlusseinheit 13a vorgesehenen zweiten Aktor 16a verbunden. Der erste Steuerleitungsanschluss 18a des Wegeventils 17a ist drucktechnisch permanent mit der Druckkammer 48a des zur Betätigung der Reibschlusseinheit 13a vorgesehenen zweiten Aktor 16a verbunden. Eine Steuerdruckentnahmestelle für den Steuerleitungsanschluss 18a liegt auf der dem Wegeventil 17a zugewandten Seite der Füllblende 70a. An dem ersten Steuerleitungsanschluss 18a des Wegeventils 17a liegt in den Vorwärtsgetriebegängen V8, V9 sowie in dem Rückwärtsgetriebegang R der Lamellenbetätigungsdruck an, welcher zum Schließen der Reibschlusseinheit 13a vorgesehen ist. In den Vorwärtsgetriebegängen V1, V2, V3, V4, V5, V6, V7 ist der erste Steuerleitungsanschluss 18a des Wegeventils 17a zumindest im Wesentlichen drucklos.

Der zweite Steuerleitungsanschluss 19a ist zur hydraulischen Betätigung des Wegeventils 17a in die Ventilstellung vorgesehen, in der der erste Aktor 15a drucktechnisch an das erste Magnetventil 53a angebunden ist. Der zweite Steuerleitungsanschluss 19a des Wegeventils 17a ist drucktechnisch permanent mit dem zur Betätigung der Formschlusseinheit 14a vorgesehenen ersten Aktor 15a verbunden. Der zweite Steuerleitungsanschluss 19a des Wegeventils 17a ist drucktechnisch permanent mit der Druckkammer 42a des zur Betätigung der Formschlusseinheit 14a vorgesehenen ersten Aktor 15a verbunden. Der zweite Steuerleitungsanschluss 19a des Wegeventils 17a ist zur Aufrechterhaltung der Ventilstellung vorgesehen, in der der erste Aktor 15a drucktechnisch an das erste Magnetventil 53a angebunden ist. In einem Zustand, in dem der erste Aktor 15a an dem ersten Magnetventil 53a angebunden ist, liegt an dem zweiten Steuerleitungsanschluss 19a des Wegeventils 17a zumindest im Wesentlichen der von dem ersten Magnetventil 53a eingestellte Betriebsmitteldruck an. Vorteilhaft sinkt durch die Füllblende 67a ein Betriebsmitteldruck am Steuerleitungsanschluss 19a in einem Lösevorgang einer Zahn-auf-Zahn-Stellung der Formschlusseinheit 14a in dem Moment, in dem der Betriebsmitteldruck in der Druckkammer 42a des ersten Aktors 15a absinkt, wobei ein Absinken des Betriebsmitteldrucks in der Druckkammer 42a durch ein Einrasten der Formschlusselements 34a und 35a der Formschlusseinheit 14a und einem dadurch bewirkten Nachrutschen des Betätigungselements 40a des Aktors 15a bewirkt wird, nicht so stark mit ab, dass das Wegeventil 17a auf eine Verbindung des Magnetventils 53a mit der Kopplungseinheit S1a umschaltet. An dem zweiten Steuerleitungsanschluss 19a des Wegeventils 17a liegt in den Vorwärtsgetriebegängen V8, V9 sowie in dem Rückwärtsgetriebegang R der Klauenbetätigungsdruck an, welcher zum Schließen der Formschlusseinheit 14a vorgesehen ist. Der erste Steuerleitungsanschluss 18a und der zweite Steuerleitungsanschluss 19a des Wegeventils 17a sind drucktechnisch voneinander getrennt. In den Vorwärtsgetriebegängen V1, V2, V3, V4, V5, V6, V7 ist der zweite Steuerleitungsanschluss 19a des Wegeventils 17a zumindest im Wesentlichen drucklos.

Der dritte Steuerleitungsanschluss 20a ist zur hydraulischen Betätigung des Wegeventils 17a in eine Ventilstellung vorgesehen, in der der erste Aktor 15a drucktechnisch von dem ersten Magnetventil 53a getrennt ist. Der dritte Steuerleitungsanschluss 20a des Wegeventils 17a ist drucktechnisch permanent mit dem zur Betätigung der Kopplungseinheit S6a vorgesehenen dritten Aktor 21a verbunden. Der dritte Steuerleitungsanschluss 20a des Wegeventils 17a ist drucktechnisch permanent mit dem Aktor 21a verbunden, der zur Betätigung der für die Vorwärtsgetriebegänge V4, V5, V6, V7, V8, V9 vorgesehenen Kopplungseinheit S6a vorgesehen ist. Der dritte Steuerleitungsanschluss 20a des Wegeventils 17a ist drucktechnisch permanent mit der Druckkammer 51a des zur Betätigung der Reibschlusseinheit 37a vorgesehenen dritten Aktors 21a verbunden. An dem dritten Steuerleitungsanschluss 20a des Wegeventils 17a liegt zumindest im Wesentlichen der in der Druckkammer 51a des dritten Aktors 21a herrschende Betriebsmitteldruck an. An dem dritten Steuerleitungsanschluss 20a des Wegeventils 17a liegt in den Vorwärtsgetriebegängen V4, V5, V6, V7, V8, V9 zumindest im Wesentlichen der Lamellenbetätigungsdruck an, welcher zum Schließen der Reibschlusseinheit 37a vorgesehen ist. Der erste Steuerleitungsanschluss 18a, der zweite Steuerleitungsanschluss 19a und der dritte Steuerleitungsanschluss 20a des Wegeventils 17a sind jeweils drucktechnisch voneinander getrennt. In den Vorwärtsgetriebegängen V1, V2, V3 sowie in dem Rückwärtsgetriebegang R ist der dritte Steuerleitungsanschluss 20a des Wegeventils 17a zumindest im Wesentlichen drucklos.

Zur hydraulischen Betätigung weist das Wegeventil 17a ein erstes Steuervolumen, ein zweites Steuervolumen und ein drittes Steuervolumen auf. Der erste Steuerleitungsanschluss 18a ist dem ersten Steuervolumen, der zweite Steuerleitungsanschluss 19a dem zweiten Steuervolumen und der dritte Steuerleitungsanschluss 20a dem dritten Steuervolumen zugeordnet. Das erste Steuervolumen ist durch den ersten Steuerleitungsanschluss 18a mit dem Betriebsmittel versorgbar. In dem ersten Steuervolumen herrscht zumindest im Wesentlichen der in der Druckkammer 48a des zweiten Aktors 16a herrschende Betriebsmitteldruck. In dem ersten Steuervolumen herrscht in den Vorwärtsgetriebegängen V8, V9 sowie in dem Rückwärtsgetriebegang R zumindest im Wesentlichen der Lamellenbetätigungsdruck, der zum Schließen der Reibschlusseinheit 13a vorgesehen ist. Das zweite Steuervolumen ist durch den zweiten Steuerleitungsanschluss 19a mit dem Betriebsmittel versorgbar. In dem zweiten Steuervolumen herrscht zumindest im Wesentlichen der in der Druckkammer 42a des ersten Aktors 15a herrschende Betriebsmitteldruck. In dem zweiten Steuervolumen herrscht in den Vorwärtsgetriebegängen V8, V9 sowie in dem Rückwärtsgetriebegang R zumindest im Wesentlichen der Klauenbetätigungsdruck, der zum Schließen der Formschlusseinheit 14a vorgesehen ist. Das dritte Steuervolumen ist durch den dritten Steuerleitungsanschluss 20a mit dem Betriebsmittel versorgbar. In dem dritten Steuervolumen herrscht zumindest im Wesentlichen der in der Druckkammer 51a des dritten Aktors 16a herrschende Betriebsmitteldruck. In dem dritten Steuervolumen herrscht in den Vorwärtsgetriebegängen V4, V5, V6, V7, V8, V9 zumindest im Wesentlichen der Lamellenbetätigungsdruck, der zum Schließen der Reibschlusseinheit 37a vorgesehen ist. Die Steuervolumina des Wegeventils 17a sind drucktechnisch jeweils von einander getrennt.

Zur drucktechnischen Anbindung der Steuerleitungsanschlüsse 18a, 19a, 20a weist die Getriebevorrichtung drei Steuerleitungen 60a, 61a, 62a auf. Die erste Steuerleitung 60a verbindet den ersten Steuerleitungsanschluss 18a und den zweiten Aktor 16a drucktechnisch miteinander. Die erste Steuerleitung 60a versorgt das erste Steuervolumen des Wegeventils 17a mit dem Betriebsmittel aus der Druckkammer 48a des zweiten Aktors 16a. Die zweite Steuerleitung 61a verbindet den zweiten Steuerleitungsanschluss 19a und den ersten Aktor 15a drucktechnisch miteinander. Die zweite Steuerleitung 61a versorgt das zweite Steuervolumen des Wegeventils 17a mit dem durch das erste Magnetventil 53a bereitgestellten Betriebsmittel. Die zweite Steuerleitung 61a verbindet drucktechnisch das zweite Steuervolumen des Wegeventils 17a mit der Arbeitsleitung 57a, die den ersten Arbeitsleitungsanschluss 28a mit dem ersten Aktor 15a verbindet. Die dritte Steuerleitung 62a verbindet den dritten Steuerleitungsanschluss 20a und den dritten Aktor 21a drucktechnisch miteinander. Die dritte Steuerleitung 62a versorgt das dritte Steuervolumen des Wegeventils 17a mit dem Betriebsmittel aus der Druckkammer 51a des dritten Aktors 21a.

Der erste Steuerleitungsanschluss 18a und der zweite Steuerleitungsanschluss 19a sind zur Betätigung des Wegeventils 17a in eine gleiche Richtung vorgesehen. Sie sind zur Einstellung derselben Ventilstellung des Wegeventils 17a vorgesehen. Eine in dem ersten Steuervolumen herrschende Kraft und eine in dem zweiten Steuervolumen herrschende Kraft sind zur Einstellung der gleichen Ventilstellung des Wegeventils 17a vorgesehen. Das erste Steuervolumen und das zweite Steuervolumen sind jeweils durch eine Steuerfläche begrenzt, die in Richtung derselben Ventilstellung wirken. Die dem ersten Steuerleitungsanschluss 18a zugeordnete erste Steuerfläche, d.h. die das erste Steuervolumen begrenzende Steuerfläche und die dem zweiten Steuerleitungsanschluss 19a zugeordnete zweite Steuerfläche, d.h. die das zweite Steuervolumen begrenzende Steuerfläche sind in dieselbe Richtung orientiert.

Der dritte Steuerleitungsanschluss 20a ist im Vergleich zu dem ersten Steuerleitungsanschluss 18a und dem zweiten Steuerleitungsanschluss 19a zur Betätigung des Wegeventils 17a in eine entgegengesetzte Richtung vorgesehen. Der dritte Steuerleitungsanschluss 20a ist im Vergleich zu den Steuerleitungsanschlüssen 18a, 19a zur Einstellung einer entgegengesetzten Ventilstellung des Wegeventils 17a vorgesehen. Eine in dem dritten Steuervolumen herrschende Kraft ist im Vergleich zu der in dem ersten Steuervolumen herrschenden Kraft und zu der in dem zweiten Steuervolumen herrschenden Kraft zur Einstellung einer entgegengesetzten Ventilstellung des Wegeventils 17a vorgesehen. Die in dem dritten Steuervolumen herrschende Kraft wirkt der in dem ersten Steuervolumen herrschenden Kraft und der in dem zweiten Steuervolumen herrschenden Kraft entgegen. Das dritte Steuervolumen ist durch eine dritte Steuerfläche begrenzt, die zur das erste Steuervolumen begrenzenden ersten Steuerfläche und zur das zweite Steuervolumen begrenzenden zweiten Steuerfläche in eine entgegengesetzte Ventilstellung wirkt. Die dem dritten Steuerleitungsanschluss 20a zugeordnete dritte Steuerfläche, d.h. die das dritte Steuervolumen begrenzende Steuerfläche ist zu der dem ersten Steuerleitungsanschluss 18a zugeordneten ersten Steuerfläche und zu der dem zweiten Steuerleitungsanschluss 19a zugeordneten zweiten Steuerfläche entgegengesetzt orientiert. Der zum Schließen der kombinierten Kopplungseinheit S2a vorgesehene Lamellenbetätigungsdruck, der zum Schließen der kombinierten Kopplungseinheit S2a vorgesehene Klauenbetätigungsdruck und der zum Schließen der Kopplungseinheit S6a vorgesehene Lamellenbetätigungsdruck wirken jeweils als Steuerdruck in dem Wegeventil 17a, wobei der zum Schließen der Kopplungseinheit S6a vorgesehene Lamellenbetätigungsdruck dem zum Schließen der kombinierten Kopplungseinheit S2a vorgesehenen Lamellenbetätigungsdruck und dem zum Schließen der kombinierten Kopplungseinheit S2a vorgesehenen Klauenbetätigungsdruck entgegenwirkt.

Das Wegeventil 17a weist ferner eine Feder 24a auf, die betätigungstechnisch dem ersten Steuerleitungsanschluss 18a und dem zweiten Steuerleitungsanschluss 19a entgegengerichtet und dem dritten Steuerleitungsanschluss 20a gleichgerichtet ist. Die Feder 24a wirkt der in dem ersten Steuervolumen herrschenden Kraft und der in dem zweiten Steuervolumen herrschenden Kraft entgegen. Die Feder 24a wirkt in Richtung der in dem dritten Steuervolumen herrschenden Kraft. Die Feder 24a ist dazu vorgesehen, durch die in dem ersten Steuervolumen herrschenden Kraft vorgespannt zu werden. Sie wird durch den zum Schließen der Reibschlusseinheit 13a vorgesehenen Lamellenbetätigungsdruck vorgespannt. Die Feder 24a ist dazu vorgesehen, durch die in dem zweiten Steuervolumen herrschende Kraft vorgespannt zu bleiben. Die Feder 24a weist eine Federkraft auf, die hinsichtlich einer Schaltrichtung zur dritten Steuerfläche gleichgerichtet ist. Die Federkraft der Feder 24a ist hinsichtlich der Schaltrichtung zur ersten Steuerfläche und zur zweiten Steuerfläche entgegengerichtet. Die Federkraft der Feder 24a und der zum Schließen der Kopplungseinheit S6a vorgesehene Lamellenbetätigungsdruck wirken dem zum Schließen der kombinierten Kopplungseinheit S2a vorgesehenen Lamellenbetätigungsdruck und dem zum Schließen der kombinierten Kopplungseinheit S2a vorgesehenen Klauenbetätigungsdruck entgegen. Die Feder 24a ist als eine Spiralfeder ausgebildet. Das Wegeventil 17a ist als ein 4/2-Wegeventil ausgebildet.

Das Wegeventil 17a ist als ein Schaltschieber ausgebildet. Es weist einen Ventilschieber auf, auf den der Betriebsmitteldruck in den Steuervolumina des Wegeventils 17a einwirkt. Der Ventilschieber des Wegeventils 17a weist die Steuerflächen auf. Der in der Druckkammer 42a des ersten Aktors 15a herrschende Betriebsmitteldruck und der in der Druckkammer 48a des zweiten Aktors 16a herrschende Betriebsmitteldruck wirken in dieselbe Bewegungsrichtung auf den Ventilschieber des Wegeventils 17a ein. Der in der Druckkammer 51a des dritten Aktors 21a herrschende Betriebsmitteldruck und die Federkraft der Feder 24a wirken in dieselbe Bewegungsrichtung auf den Ventilschieber des Wegeventils 17a ein. Dabei wirken der in der Druckkammer 42a des ersten Aktors 15a herrschende Betriebsmitteldruck und der in der Druckkammer 48a des zweiten Aktors 16a herrschende Betriebsmitteldruck dem in der Druckkammer 51a des dritten Aktors 21a herrschenden Betriebsmitteldruck und der Federkraft der Feder 24a entgegen. Der zum Schließen der Reibschlusseinheit 13a vorgesehene Lamellenbetätigungsdruck und der zum Schließen der Formschlusseinheit 14a vorgesehene Klauenbetätigungsdruck wirken auf den Ventilschieber zur Einstellung der Ventilstellung ein, in dem der erste Aktor 15a drucktechnisch mit dem ersten Magnetventil 53a verbunden ist. Der zum Schließen der Reibschlusseinheit 37a vorgesehene Lamellenbetätigungsdruck und die Federkraft der Feder 24a wirken auf den Ventilschieber zur Einstellung der Ventilstellung ein, in dem der erste Aktor 15a drucktechnisch von dem ersten Magnetventil 53a getrennt ist. Die Federkraft der Feder 24a und der zum Schließen der Kopplungseinheit S6a vorgesehene Lamellenbetätigungsdruck wirken gegen den zum Schließen der kombinierten Kopplungseinheit S2a vorgesehenen Lamellenbetätigungsdruck und gegen den zum Schließen der kombinierten Kopplungseinheit S2a vorgesehenen Klauenbetätigungsdruck auf den Ventilschieber des Wegeventils 17a.

Um ein definiertes Zeitverhalten und/oder ein definiertes Ansprechen auf den entsprechenden Betriebsmitteldruck einzustellen, weist die Getriebevorrichtung mehrere Befülldüsen 67a, 68a, 69a, 70a auf. Die Befülldüse 67a ist strömungstechnisch zwischen der Druckkammer 42a des Aktors 15a und dem Wegeventil 17a angeordnet. Die Befülldüse 67a ist in der Arbeitsleitung 57a angeordnet. Die Befülldüse 68a ist strömungstechnisch zwischen der Druckkammer 52a des Aktors 26a und dem Wegeventil 17a angeordnet. Die Befülldüse 68a ist in der Arbeitsleitung 58a angeordnet. Die Befülldüse 69a ist strömungstechnisch zwischen der Druckkammer 51a des Aktors 26a und dem Wegeventil 17a angeordnet. Die Befülldüse 70a ist strömungstechnisch zwischen der Druckkammer 48a des Aktors 16a und dem Wegeventil 17a angeordnet. Die Befülldüsen 67a, 68a, 69a, 70a sind jeweils als eine Befüllblende ausgebildet. Grundsätzlich kann auf zumindest eine der Befülldüsen 67a, 68a, 69a, 70a verzichtet werden.

Das Wegeventil 17a weist eine erste Ventilstellung, in der sein zweiter Arbeitsleitungsanschluss 29a an seinem Versorgungsleitungsanschluss 55a angebunden ist, und eine zweite Ventilstellung, in der sein erster Arbeitsleitungsanschluss 28a an den Versorgungsleitungsanschluss 55a angebunden ist, auf. In der ersten Ventilstellung des Wegeventils 17a sind sein zweiter Arbeitsleitungsanschluss 29a mit seinem Versorgungsleitungsanschluss 55a und sein erster Arbeitsleitungsanschluss 28a mit seinem Abflussanschluss 56a verbunden. In der zweiten Ventilstellung des Wegeventils 17a sind sein erster Arbeitsleitungsanschluss 28a mit seinem Versorgungsleitungsanschluss 55a und sein zweiter Arbeitsleitungsanschluss 29a mit seinem Abflussanschluss 56a verbunden. In der ersten Ventilstellung des Wegeventils 17a ist das erste Magnetventil 53a drucktechnisch mit dem zur Betätigung der Kopplungseinheit S1a vorgesehenen Aktor 26a verbunden. In der zweiten Ventilstellung des Wegeventils 17a ist das erste Magnetventil 53a drucktechnisch mit dem zur Betätigung der Formschlusseinheit 14a der kombinierten Kopplungseinheit S2a vorgesehenen Aktor 15a verbunden. In den Vorwärtsgetriebegängen V1, V2, V3, V4, V5, V6, V7 ist das Wegeventil 17a in seiner ersten Ventilstellung geschaltet. In den Vorwärtsgetriebegängen V8, V9 sowie in dem Rückwärtsgetriebegang R ist das Wegeventil 17a in seiner zweiten Ventilstellung geschaltet. Das Wegeventil 17a schaltet in seine erste Ventilstellung, wenn eine Summe aus einer auf den Ventilschieber wirkenden Kraft, die durch den zum Schließen der Kopplungseinheit S6a vorgesehenen Lamellenbetätigungsdruck resultiert, und der auf den Ventilschieber wirkenden Federkraft der Feder 24a größer ist als eine Summe aus einer auf den Ventilschieber wirkenden Kraft, die durch den zum Schließen der Kopplungseinheit S2a vorgesehenen Lamellenbetätigungsdruck resultiert, und einer auf den Ventilschieber wirkenden Kraft, die durch den zum Schließen der Kopplungseinheit S2a vorgesehenen Klauenbetätigungsdruck resultiert. Das Wegeventil 17a schaltet in seine zweite Ventilstellung, wenn die Summe aus der auf den Ventilschieber wirkenden Kraft, die durch den zum Schließen der Kopplungseinheit S6a vorgesehenen Lamellenbetätigungsdruck resultiert, und der auf den Ventilschieber wirkenden Federkraft der Feder 24a kleiner ist als die auf den Ventilschieber wirkende Kraft, die durch den zum Schließen der Kopplungseinheit S2a vorgesehenen Lamellenbetätigungsdruck resultiert. In der Figur 4 ist das Wegeventil 17a in der ersten Ventilstellung dargestellt.

Die erste Ventilstellung des Wegeventils 17a ist als eine Grundstellung ausgebildet, die sich in einem drucklosen Zustand der Druckkammern 42a, 48a, 51a selbstständig einstellt. Dazu weist das Wegeventil 17a die Feder 24a auf. Die Feder 24a stellt in den Vorwärtsgetriebegängen V1, V2, V3 selbstständig die erste Ventilstellung ein. In seiner ersten Ventilstellung verbindet das Wegeventil 17a das erste Magnetventil 53a mit dem vierten Aktor 26a, wodurch die Druckkammer 52a des vierten Aktors 26a mit dem durch das erste Magnetventil 53a eingestellten Betriebsmitteldruck zum Schließen der Kopplungseinheit S1a beaufschlagt werden kann. In seiner zweiten Ventilstellung verbindet das Wegeventil 17a das erste Magnetventil 53a mit dem ersten Aktor 15a, wodurch die Druckkammer 42a des ersten Aktors 15a mit dem durch das erste Magnetventil 53a eingestellten Betriebsmitteldruck zum Schließen der Formschlusseinheit 14a der kombinierten Kopplungseinheit S2a beaufschlagt werden kann.

Die zweite Ventilstellung des Wegeventils 17a ist als eine Schaltstellung ausgebildet, die druckgesteuert eingestellt wird. Zur Schaltung des Wegeventils 17a in die zweite Ventilstellung wird mittels dem zweiten Magnetventil der Betriebsmitteldruck in der Druckkammer 48a erhöht, bis die durch den Betriebsmitteldruck resultierende Kraft in dem ersten Steuervolumen des Wegeventils 17a die Federkraft der Feder 24a und die durch den Betriebsmitteldruck in dem dritten Steuervolumen resultierende Kraft übersteigt. Das Wegeventil 17a schaltet in die zweite Ventilstellung, wenn die durch den zum Schließen der Reibschlusseinheit 13a vorgesehenen Lamellenbetätigungsdruck resultierende Kraft in dem ersten Steuervolumen größer ist als die Summe aus der Federkraft der Feder 24a und der zum Schließen der Reibschlusseinheit 37a vorgesehenen Lamellenbetätigungsdruck resultierenden Kraft in dem dritten Steuervolumen. Dadurch verbindet das Wegeventil 17a den ersten Aktor 15a und das erste Magnetventil 53a drucktechnisch miteinander, wodurch die Formschlusseinheit 14a der kombinierten Kopplungseinheit S2a geschlossen werden kann. Liegt beim Schließen der Formschlusseinheit 14a eine Zahn-auf-Zahn-Stellung zwischen den Formschlusselementen 34a, 35a vor, wird ein Schlupfzustand zwischen den Reibschlusselementen 32a, 33a der Reibschlusseinheit 13a durch eine Reduzierung des Lamellenbetätigungsdrucks in der Druckkammer 48a eingestellt, wodurch die Zahn-auf-Zahn-Stellung aufgelöst wird. Der Lamellenbetätigungsdruck in der Druckkammer 48a wird dabei nur soweit reduziert, so dass die Summe aus der Kraft in dem ersten Steuervolumen und der Kraft in dem zweiten Steuervolumen größer ist als die Summe aus der Kraft in dem dritten Steuervolumen und der Federkraft, wodurch der geschlossene Zustand der Formschlusseinheit 14a aufrechterhalten wird. Um die Formschlusseinheit 14a wieder zu öffnen, wird der Druck über das Magnetventil 53a zunächst abgebaut. Erst danach wird zum Freigeben des Magnetventils 53a und zum Verbinden mit dem Schaltelement S1a die Position des Wegeventils umgeschaltet. Dazu wird der Betriebsmitteldruck in der Druckkammer 48a des zweiten Aktors 16a gesenkt und/oder der Betriebsmitteldruck in der Druckkammer 51a des dritten Aktors 21a erhöht, bis die Summe aus Federkraft der Feder 24a und der durch den Betriebsmitteldruck in dem dritten Steuervolumen resultierenden Kraft die Summe aus der durch den Betriebsmitteldruck in dem ersten Steuervolumen resultierenden Kraft und der durch den Betriebsmitteldruck in dem zweiten Steuervolumen resultierenden Kraft übersteigt. Die Umschaltung des Wegeventils 17a kann auch nur durch eine Anhebung des Drucks in der Druckkammer 51a bei konstantem Druck in der Druckkammer 48a erfolgen. Das Wegeventil 17a schaltet in seine erste Ventilstellung, wenn die Summe aus der Kraft in dem dritten Steuervolumen und der Federkraft größer ist als die Summe aus der Kraft in dem ersten Steuervolumen und der Kraft in dem zweiten Steuervolumen. Dadurch kann wieder die dritte Kopplungseinheit S1a mittels des ersten Magnetventils 53a geschlossen werden.

Zum Schließen der Formschlusseinheit 14a der kombinierten Kopplungseinheit S2a muss die durch den Betriebsmitteldruck in der Druckkammer 48a des zweiten Aktors 16a resultierende Kraft auf den Ventilschieber größer sein als die Summe aus der Federkraft der Feder 24a und der durch den Betriebsmitteldruck in der Druckkammer 51a des dritten Aktors 21a resultierenden Kraft auf den Ventilschieber, wodurch das Wegeventil 17a in seine zweite Ventilstellung schaltet. Des Weiteren muss das erste Magnetventil 53 einen Betriebsmitteldruck bereitstellen, durch den die Formschlusseinheit 14a geschlossen wird.

In den Vorwärtsgetriebegängen V1, V2, V3, V4, V5, V6, V7 ist der zum Schließen der kombinierten Kopplungseinheit S2a vorgesehene Lamellenbetätigungsdruck null, wodurch in den Vorwärtsgetriebegängen V1, V2, V3 die Federkraft der Feder 24a und in den Vorwärtsgetriebegängen V4, V5, V6, V7 der zum Schließen der Kopplungseinheit S6a vorgesehene Lamellenbetätigungsdruck den Ventilschieber des Wegeventils 17a in die erste Ventilstellung bewegt. In den Vorwärtsgetriebegängen V8, V9 ist die auf den Ventilschieber wirkende Kraft, die durch den zum Schließen der kombinierten Kopplungseinheit S2a vorgesehenen Lamellenbetätigungsdruck resultiert, größer als die Summe aus der auf den Ventilschieber wirkenden Federkraft der Feder 24a und der auf den Ventilschieber wirkenden Kraft, die durch den zum Schließen der Kopplungseinheit S6a vorgesehenen Lamellenbetätigungsdruck resultiert, wodurch der zum Schließen der kombinierten Kopplungseinheit S2a vorgesehene Lamellenbetätigungsdruck den Ventilschieber des Wegeventils 17a in die zweite Ventilstellung bewegt. In den Vorwärtsgetriebegängen V8, V9 muss der zum Schließen der kombinierten Kopplungseinheit S2a vorgesehene Lamellenbetätigungsdruck den Ventilschieber gegen den zum Schließen der Kopplungseinheit S6a vorgesehenen Lamellenbetätigungsdruck und gegen die Federkraft der Feder 24a bewegen. In dem Rückwärtsgetriebegang ist die auf den Ventilschieber wirkende Kraft, die durch den zum Schließen der kombinierten Kopplungseinheit S2a vorgesehenen Lamellenbetätigungsdruck resultiert, größer als die auf den Ventilschieber wirkende Federkraft der Feder 24a, wodurch der zum Schließen der kombinierten Kopplungseinheit S2a vorgesehene Lamellenbetätigungsdruck den Ventilschieber des Wegeventils 17a in die zweite Ventilstellung bewegt. In dem Rückwärtsgetriebegang R muss der zum Schließen der kombinierten Kopplungseinheit S2a vorgesehene Lamellenbetätigungsdruck den Ventilschieber lediglich gegen die Federkraft der Feder 24a bewegen, da der zum Schließen der Kopplungseinheit S6a vorgesehene Lamellenbetätigungsdruck in dem Rückwärtsgetriebegang R null ist.

Falls der zum Schließen der kombinierten Kopplungseinheit S2a vorgesehene Lamellenbetätigungsdruck in dem geschalteten Vorwärtsgetriebegängen V8, V9 sowie in dem Rückwärtsgetriebegang R abfällt, insbesondere zum Auflösen einer Zahn-auf-Zahn-Stellung in der Formschlusseinheit 14a der kombinierten Kopplungseinheit S2a, hält die Summe aus dem zum Schließen der kombinierten Kopplungseinheit S2a vorgesehenen Klauenbetätigungsdruck und der auf ein Druckniveau unter einen Haltedruck für die Lamellen der Reibschlusseinheit 13a abgesenkte Lamellenbetätigungsdruck den Ventilschieber des Wegeventils 17a in der zweiten Ventilstellung, da die Summe dieser auf den Ventilschieber wirkenden Kräfte größer ist als die Summe aus der auf den Ventilschieber entgegengesetzt wirkenden Federkraft der Feder 24a und der Kraft, die aus dem zum Schließen der Kopplungseinheit S6a vorgesehenen Lamellenbetätigungsdruck resultiert.

Das in Fig. 4 gezeigte Ausführungsbeispiel der Erfindung ermöglicht vorteilhaft ein Lösen einer Zahn-auf-Zahn-Stellung der Formschlusseinheit14a bei einer geringen mechanischen Belastung der Klauenverzahnung. Die mechanische Belastung der Klauenverzahnung beim Lösen einer Zahn-auf-Zahn-Stellung kann mit dem in Fig. 4 gezeigten Ausführungsbeispiel gering gehalten werden, da der Klauenbetätigungsdruck lediglich größer als die Summe der Kräfte aus dem Betätigungsdruck der Kopplungseinheit S6a und der Federkraft der Feder 24a sein muss. Außerdem ist es durch das Vorsehen zweier Steuerflächen, der ersten Steuerfläche und der zweiten Steuerfläche, die jeweils dem ersten Steuerleitungsanschluss 19a und dem zweiten Steuerleitungsanschluss 20a zugeordnet sind, bei dem Ausführungsbeispiel der Erfindung, das in Fig. 4 gezeigt ist, möglich, beim Auflösen einer Zahn-auf-Zahn-Stellung einen Restbetätigungsdruck, wie beispielsweise das Druckniveau der Rückdruckfeder der parallelgeschalteten Reibschlusseinheit 13a, am Wegeventil 17a zu erhalten, der zusammen mit dem Klauenbetätigungsdruck die Ventilstellung des Wegeventils 17a beim Lösen einer Zahn-auf-Zahn-Stellung hält. Der Klauenbetätigungsdruck beim Lösen einer Zahn-auf-Zahn-Stellung kann deshalb niedriger gewählt werden.

Der Klauenbetätigungsdruck ist vorteilhaft kleiner als ein Arbeitsdruck der Getriebevorrichtung. Im Rückwärtsgetriebegang R wird vorteilhaft der dritte Aktor nicht mit Betätigungsdruck beaufschlagt, so dass im Rückwärtsgetriebegang R keine Druckkraft am dritten Steuerleitungsanschluss 20a anliegt. Der Klauenbetätigungsdruck übt eine Axialkraft auf die Klauenverzahnung aus. Je höher die Axialkraft auf die Klauenverzahnung ist, desto höher ist ein Verschleiß der Klauenverzahnung in einem Lösevorgang einer Zahn-auf-Zahn-Stellung der Klauenverzahnung.

Weiter kann durch den vergleichsweise geringen notwendigen Klauenbetätigungsdruck zum Lösen einer Zahn-auf-Zahn-Stellung der Durchmesser der Befülldüse 67a vergleichsweise groß ausgebildet sein, wodurch bei dem Ausführungsbeispiel der Erfindung, das in Fig. 4 gezeigt ist, sich der Durchmesser der Befülldüse 67a nicht verzögernd in einem Auslegevorgang der Formschlusseinheit 14a auswirkt, so dass vorteilhaft ein spontanes Auslegen der Formschlusseinheit 14a möglich ist.

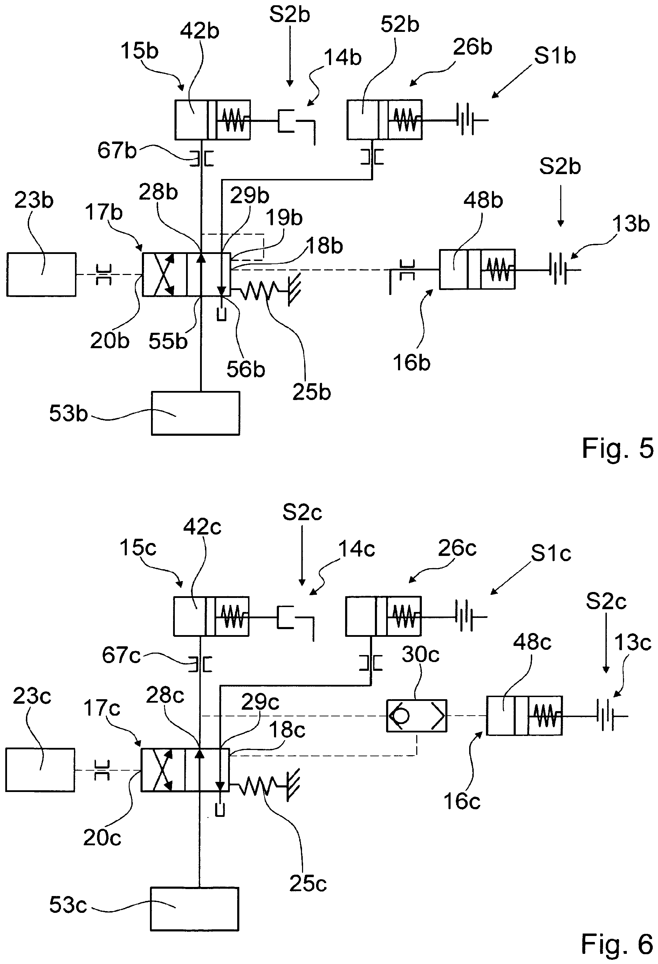

In den Figuren 5 und 6 sind zwei weitere Getriebevorrichtungen teilweise gezeigt. Die nachfolgende Beschreibung beschränkt sich im Wesentlichen auf die Unterschiede zwischen den Ausführungsbeispielen, wobei bezüglich gleichbezeichneter Bauteile, insbesondere in Bezug auf Bauteile mit gleichen Bezugszeichen, grundsätzlich auch auf die Figur und/oder Figuren und/oder die Beschreibung der anderen Ausführungsbeispiele, insbesondere des Ausführungsbeispiels in den Figuren 1 bis 4, verwiesen werden kann. Zur Unterscheidung der Ausführungsbeispiele ist der Buchstabe a in den Bezugszeichen des Ausführungsbeispiels in den Figuren 1 bis 4 durch den Buchstaben b und c in den Bezugszeichen der Ausführungsbeispiele in den Figuren 5 und 6 ersetzt.

Figur 5 zeigt teilweise eine Getriebevorrichtung für ein Kraftfahrzeug in einem zweiten Ausführungsbeispiel. Die Getriebevorrichtung umfasst eine kombinierte Kopplungseinheit S2b, die zur drehfesten Verbindung zweier Kopplungselemente eine Reibschlusseinheit 13b und eine parallel zur Reibschlusseinheit 13b geschaltete Formschlusseinheit 14b aufweist, einen ersten hydraulischen Aktor 15b zur Betätigung der Formschlusseinheit 14b, einen zweiten hydraulischen Aktor 16b zur Betätigung der Reibschlusseinheit 13b und ein zur Ansteuerung des ersten Aktors 15b vorgesehenes Wegeventil 17b, das einen ersten Steuerleitungsanschluss 18b, einen zweiten Steuerleitungsanschluss 19b und einen dritten Steuerleitungsanschluss 20b aufweist. Der erste Steuerleitungsanschluss 18b ist drucktechnisch mit dem zweiten Aktor 16b und der zweite Steuerleitungsanschluss 19b drucktechnisch mit dem ersten Aktor 15b verbunden. Des Weiteren weist das Wegeventil 17b einen ersten Arbeitsleitungsanschluss 28b, der mit dem ersten Aktor 15b der kombinierten Kopplungseinheit S2b verbunden ist, und einen zweiten Arbeitsleitungsanschluss 29b, der mit einem vierten Aktor 26b zur Betätigung einer weiteren Kopplungseinheit S1b verbunden ist, auf. Das Wegeventil 17b weist ferner eine Feder 25b auf. Zur Betriebsmittelversorgung des ersten Aktors 15b und des vierten Aktors 26b weist die Getriebevorrichtung ein erstes Magnetventil 53b auf. Das Wegeventil 17b steuert die Doppelnutzung des ersten Magnetventils 53b. Die Getriebevorrichtung weist weiter ein Arbeitsdrucksystem 23b auf, in dem ein Arbeitsdruck herrscht.

Im Unterschied zu dem vorherigen Ausführungsbeispiel ist der dritte Steuerleitungsanschluss 20b permanent drucktechnisch mit dem Arbeitsdrucksystem 23b verbunden. An dem dritten Steuerleitungsanschluss 20b des Wegeventils 17b liegt zumindest im Wesentlichen der Arbeitsdruck an. Somit herrscht in einem dritten Steuervolumen des Wegeventils 17b der Arbeitsdruck. Der Arbeitsdruck wirkt einem an dem ersten Steuerleitungsanschluss 18b anliegenden Betriebsmitteldruck und einem an dem zweiten Steuerleitungsanschluss 19b anliegenden Betriebsmitteldruck entgegen. Ein zum Schließen der kombinierten Kopplungseinheit S2b vorgesehene Lamellenbetätigungsdruck, ein zum Schließen der kombinierten Kopplungseinheit S2b vorgesehene Klauenbetätigungsdruck und der Arbeitsdruck wirken jeweils als Steuerdruck in dem Wegeventil 17b, wobei der Arbeitsdruck dem zum Schließen der kombinierten Kopplungseinheit S2b vorgesehenen Lamellenbetätigungsdruck und dem zum Schließen der kombinierten Kopplungseinheit S2b vorgesehenen Klauenbetätigungsdruck entgegenwirkt. Der Arbeitsdruck wirkt auf einen Ventilschieber des Wegeventils 17b zur Einstellung einer Ventilstellung ein, in dem der erste Aktor 15b drucktechnisch von dem ersten Magnetventil 53b getrennt ist.

Im weiteren Unterschied zu dem vorherigen Ausführungsbeispiel ist die Feder 25b betätigungstechnisch dem dritten Steuerleitungsanschluss 20b entgegengerichtet und dem ersten Steuerleitungsanschluss 18b sowie dem zweiten Steuerleitungsanschluss 19b gleichgerichtet. Die Feder 25b wirkt entgegen einer in einem dritten Steuervolumen des Wegeventils 17b herrschenden Kraft auf den Ventilschieber ein. Die Feder 25b wirkt in Richtung einer in einem ersten Steuervolumen des Wegeventils 17b herrschenden Kraft sowie in Richtung einer in einem zweiten Steuervolumen des Wegeventils 17b herrschenden Kraft auf den Ventilschieber ein. Die Feder 25b ist dazu vorgesehen, durch die in dem dritten Steuervolumen herrschenden Kraft vorgespannt zu werden. Sie wird durch den Arbeitsdruck vorgespannt. Die Feder 25b wirkt auf den Ventilschieber des Wegeventils 17b zur Einstellung einer Ventilstellung ein, in dem der erste Aktor 15b drucktechnisch mit dem ersten Magnetventil 53b verbunden ist. Die Feder 25b weist eine Federkraft auf, die hinsichtlich einer Schaltrichtung zur dritten Steuerfläche entgegengerichtet ist. Die Federkraft der Feder 25b ist hinsichtlich der Schaltrichtung zu einer ersten Steuerfläche des Wegeventils 17b und zu einer zweiten Steuerfläche des Wegeventils 17b gleichgerichtet. Die Federkraft der Feder 25b wirkt gemeinsam mit dem zum Schließen der kombinierten Kopplungseinheit S2b vorgesehenen Lamellenbetätigungsdruck und dem zum Schließen der kombinierten Kopplungseinheit S2b vorgesehenen Klauenbetätigungsdruck dem Arbeitsdruck entgegen.

Ferner sind ein durch das erste Magnetventil 53b eingestellter Klauenbetätigungsdruck in einer Druckkammer 42b des ersten Aktors 15b und der Arbeitsdruck im Unterschied zum vorherigen Ausführungsbeispiel zumindest im Wesentlichen gleich. Außerdem ist der durch ein zweites Magnetventil eingestellte Lamellenbetätigungsdruck in einer Druckkammer 48b des zweiten Aktors 16b und der Arbeitsdruck im Unterschied zum vorherigen Ausführungsbeispiel zumindest im Wesentlichen gleich.

Das Wegeventil 17b weist eine erste Ventilstellung, in der sein erster Arbeitsleitungsanschluss 28b an seinem Versorgungsleitungsanschluss 55b angebunden ist, und eine zweite Ventilstellung, in der sein zweiter Arbeitsleitungsanschluss 29b an den Versorgungsleitungsanschluss 55b angebunden ist, auf. In der ersten Ventilstellung des Wegeventils 17b sind sein erster Arbeitsleitungsanschluss 28b mit seinem Versorgungsleitungsanschluss 55b und sein zweiter Arbeitsleitungsanschluss 29b mit seinem Abflussanschluss 56b verbunden. In der zweiten Ventilstellung des Wegeventils 17b sind sein zweiter Arbeitsleitungsanschluss 29b mit seinem Versorgungsleitungsanschluss 55b und sein erster Arbeitsleitungsanschluss 28b mit seinem Abflussanschluss 56b verbunden. In der ersten Ventilstellung des Wegeventils 17b ist das erste Magnetventil 53b drucktechnisch mit dem ersten Aktor 15b verbunden, wodurch die Druckkammer 42a des ersten Aktors 15b mit dem durch das erste Magnetventil 53b eingestellten Klauenbetätigungsdruck zum Schließen der Formschlusseinheit 14b beaufschlagt werden kann. In der zweiten Ventilstellung des Wegeventils 17b ist das erste Magnetventil 53b drucktechnisch mit dem vierten Aktor 26b verbunden, wodurch eine Druckkammer 52b des vierten Aktors 26b mit einem durch das erste Magnetventil 53b eingestellten Lamellenbetätigungsdruck zum Schließen der Kopplungseinheit S1b beaufschlagt werden kann. In der Figur 5 ist das Wegeventil 17b in der ersten Ventilstellung dargestellt. Die erste Ventilstellung des Wegeventils 17b stellt sich bei drucklosem Arbeitsdrucksystem 23b selbstständig ein. Dazu weist das Wegeventil 17b die Feder 25b auf. Bei Vorliegen eines Arbeitsdrucks und drucklosen Druckkammern 42b, 48b ist das Wegeventil 17b in seiner zweiten Ventilstellung geschaltet. Da der Arbeitsdruck und der zum Schließen der Reibschlusseinheit 13b vorgesehene Lamellenbetätigungsdruck in der Druckkammer 48b zumindest im Wesentlichen gleich sind, schaltet das Wegeventil 17b aufgrund der Feder 25b in seine erste Ventilstellung, wenn in der Druckkammer 48b der Lamellenbetätigungsdruck herrscht.

Zur Schaltung des Wegeventils 17b ausgehend von der zweiten Ventilstellung in die erste Ventilstellung wird mittels des zweiten Magnetventils der zum Schließen der Reibschlusseinheit 13b vorgesehene Lamellenbetätigungsdruck in der Druckkammer 48a des zweiten Aktors 16b eingestellt. Die Feder 25b stellt die erste Ventilstellung ein, wenn der zum Schließen der Reibschlusseinheit 13b vorgesehene Lamellenbetätigungsdruck in der Druckkammer 48b eingestellt ist. Um die Formschlusseinheit 14a wieder zu öffnen, erfolgt zunächst eine Druckabsenkung über das Magnetventil 53b. Erst danach wird die Stellung des Wegeventils 17b gewechselt, so dass über das Magnetventil 53b das Schaltelement 27b wieder angesteuert werden kann. Der Schaltschieber wechselt erst dann seine Schaltstellung, wenn die Kraft auf dem Wegeventil durch den Lamellenbetätigungsdruck in der Druckkammer 48b zusammen mit der Federkraft kleiner ist als die Kraft auf dem Wegeventil durch den Arbeitsdruck. Dieses kann erreicht werden, indem der Arbeitsdruck höher angesteuert wird als der Lamellenbetätigungsdruck in der Druckkammer 48b.

In den Vorwärtsgetriebegängen V1, V2, V3, V4, V5, V6, V7 ist der zum Schließen der kombinierten Kopplungseinheit S2b vorgesehene Lamellenbetätigungsdruck null, wodurch der Arbeitsdruck den Ventilschieber des Wegeventils 17b in die zweite Ventilstellung bewegt, da die auf den Ventilschieber wirkende Kraft, die durch den Arbeitsdruck resultiert, größer ist als die Federkraft der Feder 24b. In den Vorwärtsgetriebegängen V1, V2, V3, V4, V5, V6, V7 muss der Arbeitsdruck den Ventilschieber lediglich gegen die Federkraft der Feder 24b bewegen. In den Vorwärtsgetriebegängen V8, V9 sowie dem Rückwärtsgetriebegang R sind die auf den Ventilschieber wirkende Kraft, die durch den zum Schließen der kombinierten Kopplungseinheit S2b vorgesehenen Lamellenbetätigungsdruck resultiert, und die auf den Ventilschieber wirkende Kraft, die durch den Arbeitsdruck resultiert, gleich groß, wodurch die Federkraft der Feder 24b den Ventilschieber des Wegeventils 17b in die erste Ventilstellung bewegt.

Um ein definiertes Zeitverhalten und/oder ein definiertes Ansprechen auf den entsprechenden Betriebsmitteldruck einzustellen, weist die Getriebevorrichtung, die in Fig. 5 gezeigt ist, zumindest die Befülldüse 67b auf. Die Befülldüse 67b ist strömungstechnisch zwischen der Druckkammer 42b des Aktors 15b und dem Wegeventil 17b angeordnet.

Figur 6 zeigt teilweise eine Getriebevorrichtung für ein Kraftfahrzeug in einem dritten nicht beanspruchten Ausführungsbeispiel. Die Getriebevorrichtung umfasst eine kombinierte Kopplungseinheit S2c, die zur drehfesten Verbindung zweier Kopplungselemente eine Reibschlusseinheit 13c und eine parallel zur Reibschlusseinheit 13c geschaltete Formschlusseinheit 14c aufweist, einen ersten hydraulischen Aktor 15c zur Betätigung der Formschlusseinheit 14c, einen zweiten hydraulischen Aktor 16c zur Betätigung der Reibschlusseinheit 13c und ein zur Ansteuerung des ersten Aktors 15c vorgesehenes Wegeventil 17c. Des Weiteren weist das Wegeventil 17c einen ersten Arbeitsleitungsanschluss 28c, der mit dem ersten Aktor 15c der kombinierten Kopplungseinheit S2c verbunden ist, und einen zweiten Arbeitsleitungsanschluss 29c, der mit einem vierten Aktor 26c zur Betätigung einer zweiten weiteren Kopplungseinheit S1c verbunden ist, auf. Das Wegeventil 17c weist ferner eine Feder 25c auf. Zur Betriebsmittelversorgung des ersten Aktors 15c und des vierten Aktors 26c weist die Getriebevorrichtung ein erstes Magnetventil 53c auf. Das Wegeventil 17c steuert die Doppelnutzung des ersten Magnetventils 53c. Die Getriebevorrichtung weist weiter ein Arbeitsdrucksystem 23c auf. Ferner entsprechen ein durch das erste Magnetventil 53c eingestellter Klauenbetätigungsdruck in einer Druckkammer 42c des ersten Aktors 15c und ein durch ein zweites Magnetventil eingestellter Lamellenbetätigungsdruck in einer Druckkammer 48c des zweiten Aktors 16c einem Arbeitsdruck in dem Arbeitsdrucksystem 23c.

Im Unterschied zu dem vorherigen Ausführungsbeispiel weist das Wegeventil 17b lediglich zwei Steuerleitungsanschlüsse 18c, 20c und damit lediglich zwei Steuervolumina auf. Der erste Steuerleitungsanschluss 18c ist drucktechnisch mit dem ersten Aktor 15c und dem zweiten Aktor 16c verbindbar. Zur druckabhängigen Verbindung des ersten Steuerleitungsanschlusses 18c mit dem ersten Aktor 15c oder mit dem zweiten Aktor 16c weist die Getriebevorrichtung ein Umschaltventil 30c auf. Das Umschaltventil 30c verbindet den ersten Steuerleitungsanschluss 18c mit dem ersten Aktor 15c, wenn ein Klauenbetätigungsdruck in der Druckkammer 42c des ersten Aktors 15c größer ist als ein Lamellenbetätigungsdruck in der Druckkammer 48c des zweiten Aktors 16c. Das Umschaltventil 30c verbindet den ersten Steuerleitungsanschluss 18c mit dem zweiten Aktor 16c, wenn der Lamellenbetätigungsdruck in der Druckkammer 48c größer ist als der Klauenbetätigungsdruck in der Druckkammer 42c. Das Umschaltventil 30c ist als ein Kugelumschaltventil ausgebildet.

Der andere Steuerleitungsanschluss 20c ist permanent drucktechnisch mit dem Arbeitsdrucksystem 23c verbunden. Der Arbeitsdruck und ein Betriebsmitteldruck an dem ersten Steuerleitungsanschluss 18c wirken gegeneinander auf einen Ventilschieber des Wegeventils 17c. Eine dem ersten Steuerleitungsanschluss 18c zugeordnete Steuerfläche des Ventilschiebers und eine dem anderen Steuerleitungsanschluss 20c zugeordnete Steuerfläche des Ventilschiebers sind entgegengerichtet zueinander orientiert. Eine Federkraft der Feder 25c ist dem dritten Steuerleitungsanschluss 20c entgegengerichtet und dem ersten Steuerleitungsanschluss 18c gleichgerichtet. Die Feder 25c wirkt entgegen einer in einem dritten Steuervolumen des Wegeventils 17c herrschenden Kraft auf den Ventilschieber ein.

Um ein definiertes Zeitverhalten und/oder ein definiertes Ansprechen auf den entsprechenden Betriebsmitteldruck einzustellen, weist die Getriebevorrichtung, die in Fig. 6 gezeigt ist, zumindest die Befülldüse 67c auf. Die Befülldüse 67c ist strömungstechnisch zwischen der Druckkammer 42c des Aktors 15c und dem Wegeventil 17c angeordnet.

### Bezugszeichenliste

- 13: Reibschlusseinheit
- 14: Formschlusseinheit
- 15: Aktor
- 16: Aktor
- 17: Wegeventil
- 18: Steuerleitungsanschluss
- 19: Steuerleitungsanschluss
- 20: Steuerleitungsanschluss
- 21: Aktor
- 23: Arbeitsdrucksystem
- 24: Feder
- 25: Feder
- 26: Aktor
- 28: Arbeitsleitungsanschluss
- 29: Arbeitsleitungsanschluss
- 30: Umschaltventil
- 31: Getriebegehäuse
- 32: Reibschlusselement
- 33: Reibschlusselement
- 34: Formschlusselement
- 35: Formschlusselement
- 36: Betätigungsrichtung
- 37: Reibschlusseinheit
- 38: Reibschlusseinheit
- 39: Betätigungszylinder
- 40: Kolbenelement
- 41: Betätigungselement
- 42: Druckkammer
- 44: Feder
- 45: Betätigungszylinder
- 46: Kolbenelement
- 47: Betätigungselement
- 48: Druckkammer
- 50: Feder
- 51: Druckkammer
- 52: Druckkammer
- 53: Magnetventil
- 54: Betriebsmittelausgang
- 55: Versorgungsleitungsanschluss
- 56: Abflussanschluss
- 57: Arbeitsleitung
- 58: Arbeitsleitung
- 59: Versorgungsleitung
- 60: Steuerleitung
- 61: Steuerleitung
- 62: Steuerleitung
- 63: Getrieberadsatz
- 64: Getriebeeingangswelle
- 65: Getriebeausgangswelle
- 66: Hauptrotationsachse
- 67: Befülldüse
- 68: Befülldüse
- 69: Befülldüse
- 70: Befülldüse
- P1: Planetenradstufe
- P11: Sonnenrad
- P12: Planetenradträger
- P13: Hohlrad
- P14: Planetenrad
- P2: Planetenradstufe
- P21: Sonnenrad
- P22: Planetenradträger
- P23: Hohlrad
- P24: Planetenrad
- P3: Planetenradstufe
- P31: Sonnenrad
- P32: Planetenradträger
- P33: Hohlrad
- P34: Planetenrad
- P4: Planetenradstufe
- P41: Sonnenrad
- P42: Planetenradträger
- P43: Hohlrad
- P44: Planetenrad
- S1: Kopplungseinheit
- S11: Kopplungselement
- S12: Kopplungselement
- S2: Kopplungseinheit
- S21: Kopplungselement
- S22: Kopplungselement
- S3: Kopplungseinheit
- S31: Kopplungselement
- S32: Kopplungselement
- S4: Kopplungseinheit
- S41: Kopplungselement
- S42: Kopplungselement
- S5: Kopplungseinheit
- S51: Kopplungselement
- S52: Kopplungselement
- S6: Kopplungseinheit
- S61: Kopplungselement
- S62: Kopplungselement
- V1: Vorwärtsgetriebegang
- V2: Vorwärtsgetriebegang
- V3: Vorwärtsgetriebegang
- V4: Vorwärtsgetriebegang
- V5: Vorwärtsgetriebegang
- V6: Vorwärtsgetriebegang
- V7: Vorwärtsgetriebegang
- V8: Vorwärtsgetriebegang
- V9: Vorwärtsgetriebegang
- R: Rückwärtsgetriebegang

## Patentansprüche

1. Getriebevorrichtung für ein Kraftfahrzeug, mit zumindest einer Kopplungseinheit (S2a; S2b; S2c), die zur drehfesten Verbindung zweier Kopplungselemente (S21a, S22a) eine Reibschlusseinheit (13a; 13b; 13c) und eine parallel zur Reibschlusseinheit (13a; 13b; 13c) geschaltete Formschlusseinheit (14a; 14b; 14c) aufweist, mit einem ersten hydraulischen und/oder pneumatischen Aktor (15a; 15b; 15c) zur Betätigung der Formschlusseinheit (14a; 14b; 14c), mit einem zweiten hydraulischen und/oder pneumatischen Aktor (16a; 16b; 16c) zur Betätigung der Reibschlusseinheit (13a; 13b; 13c) und mit einem Wegeventil (17a; 17b; 17c) zur Ansteuerung des zur Betätigung der Formschlusseinheit (14a; 14b; 14c) vorgesehenen ersten Aktors (15a; 15b; 15c),
wobei das Wegeventil (17a; 17b; 17c) einen Steuerleitungsanschluss (18a; 18b; 18c) aufweist, der in zumindest einem Betriebszustand drucktechnisch mit dem zur Betätigung der Reibschlusseinheit (13a; 13b; 13c) vorgesehenen zweiten Aktor (16a; 16b; 16c) verbunden ist
**dadurch gekennzeichnet, dass**
das Wegeventil (17a; 17b) einen zweiten Steuerleitungsanschluss (19a; 19b) aufweist, der in zumindest einem Betriebszustand drucktechnisch mit dem zur Betätigung der Formschlusseinheit (14a; 14b) vorgesehenen ersten Aktor (15a; 15b) verbunden ist..

2. Getriebevorrichtung nach Anspruch 1,
**dadurch gekennzeichnet, dass**
das Wegeventil (17a; 17b) einen Ventilschieber mit zwei, jeweils einem der Steuerleitungsanschlüsse (18a, 19a; 18b, 19b) zugeordnete Steuerflächen aufweist, die in dieselbe Richtung orientiert sind.

3. Getriebevorrichtung nach Anspruch 1 oder 2,
**dadurch gekennzeichnet, dass**
das Wegeventil (17a; 17b) zumindest einen dritten Steuerleitungsanschluss (20a; 20b) aufweist und der Ventilschieber eine dem dritten Steuerleitungsanschluss (20a; 20b) zugeordnete Steuerfläche aufweist, die zu den weiteren Steuerflächen in die entgegengesetzte Richtung orientiert ist.

4. Getriebevorrichtung nach Anspruch 3,
**gekennzeichnet durch**
ein Magnetventil und einen dritten Aktor (21a) zur Betätigung einer ersten weiteren Kopplungseinheit (S6a), die in zumindest einem Betriebszustand drucktechnisch mit dem dritten Steuerleitungsanschluss (20a) verbunden ist.

5. Getriebevorrichtung zumindest nach Anspruch 4,
**dadurch gekennzeichnet, dass**
das Wegeventil (17a) zumindest eine Feder (24a) aufweist, deren Federkraft in die gleiche Richtung orientiert ist wie die Steuerfläche, die dem dritten Steuerleitungsanschluss (20a) des Ventilschiebers zugeordnet ist.

6. Getriebevorrichtung zumindest nach Anspruch 5,
**dadurch gekennzeichnet, dass**
die erste weitere Kopplungseinheit (S6a) in einem vierten (V4), fünften (V5), sechsten (V6), siebten (V7), achten (V8) und neunten (V9) Vorwärtsgetriebegang geschlossen ist und die Kopplungseinheit (S2a; S2b; S2c) in dem achten (V8) Vorwärtsgetriebegang, in dem neunten (V9) Vorwärtsgetriebegang und in dem Rückwärtsgetriebegang (R) geschlossen ist.

7. Getriebevorrichtung nach Anspruch 3,
**gekennzeichnet durch**
ein Arbeitsdrucksystem (23b), das in zumindest einem Betriebszustand drucktechnisch mit dem dritten Steuerleitungsanschluss (20b) verbunden ist.

8. Getriebevorrichtung zumindest nach Anspruch 7,
**dadurch gekennzeichnet, dass**
das Wegeventil (17b) zumindest eine Feder (25b) aufweist, deren Federkraft in die entgegengesetzte Richtung orientiert ist wie die Steuerfläche des Ventilschiebers, die dem dritten Steuerleitungsanschluss (20b) zugeordnet ist.

9. Getriebevorrichtung nach einem der vorhergehenden Ansprüche,
**gekennzeichnet durch**
ein weiteres Magnetventil (53a) und einen vierten Aktor (26a; 26b; 26c) zur Betätigung einer zweiten weiteren Kopplungseinheit (S1a; S1b; S1c), wobei das Wegeventil (17a; 17b; 17c) einen ersten Arbeitsleitungsanschluss (28a; 28b; 28c), mit dem der erste Aktor (15a; 15b; 15c) verbunden ist, und einen zweiten Arbeitsleitungsanschluss (29a; 29b; 29c), mit dem der vierte Aktor (26a; 26b; 26c) verbunden ist, aufweist.

## Claims

1. Transmission device for a motor vehicle, with at least one coupling unit (S2a; S2b; S2c) having a frictional engagement unit (13a; 13b; 13c) and a positive engagement unit (14a; 14b; 14c) connected in parallel with the frictional engagement unit (13a; 13b; 13c) for the non-rotatable connection of two coupling elements (S21a, S22a), with a first hydraulic and/or pneumatic actuator (15a; 15b; 15c) for the actuation of the positive engagement unit (14a; 14b; 14c), with a second hydraulic and/or pneumatic actuator (16a; 16b; 16c) for the actuation of the frictional engagement unit (13a; 13b; 13c) and with a directional valve (17a; 17b; 17c) for the control of the first actuator (15a; 15b; 15c) provided for the actuation of the positive engagement unit (14a; 14b; 14c),
wherein the directional valve (17a; 17b; 17c) has a control line port (18a; 18b; 18c), which is connected to the second actuator (16a; 16b; 16c) provided for the actuation of the frictional engagement unit (13a; 13b; 13c) in terms of pressure technology in at least one operating state, **characterised in that**
the directional valve (17a; 17b) has a second control line port (19a; 19b), which is connected to the first actuator (15a; 15b) provided for the actuation of the positive engagement unit (14a; 14b) in terms of pressure technology in at least one operating state.

2. Transmission device according to claim 1,
**characterised in that**
the directional valve (17a; 17b) has a valve spool with two control faces, each of which is assigned to one of the control line ports (18a, 19a; 18b, 19b) and which are oriented in the same direction.

3. Transmission device according to claim 1 or 2,
**characterised in that**
the directional valve (17a; 17b) has at least one third control line port (20a; 20b) and the valve spool has a control face which is assigned to the third control line port (20a; 20b) and which is oriented in the opposite direction relative to the further control faces.

4. Transmission device according to claim 3,
**characterised by**
a solenoid valve and a third actuator (21a) for the actuation of a first further coupling unit (S6a), which is connected to the third control line port (20a) in terms of pressure technology in at least one operating state.

5. Transmission device according at least to claim 4,
**characterised in that**
the directional valve (17a) has at least one spring (24a), the spring force of which is oriented in the same direction as the control face assigned to the third control line port (20a) of the valve spool.

6. Transmission device according to claim 5,
**characterised in that**
the first further coupling unit (S6a) is closed in a fourth (V4), fifth (V5), sixth (V6), seventh (V7), eighth (V8) and ninth (V9) forward gear and the coupling unit (S2a; S2b; S2c) is closed in the eighth (V8) and the ninth (V9) forward gear and in the reverse gear (R).

7. Transmission device according to claim 3,
**characterised by**
a working pressure system (23b), which is connected to the third control line port (20b) in terms of pressure technology in at least one operating state.

8. Transmission device according to at least claim 7,
**characterised in that**
the directional valve (17b) has at least one spring (25b), the spring force of which is oriented in the opposite direction to the control face of the valve spool which is assigned to the third control line port (20b).

9. Transmission device according to any of the preceding claims, **characterised by**
a further solenoid valve (53a) and a fourth actuator (26a; 26b; 26c) for the actuation of a second further coupling unit (S1a; S1b; S1c), wherein the directional valve (17a; 17b; 17c) has a first working line port (28a; 28b; 28c), to which the first actuator (15a; 15b; 15c) is connected, and a second working line port (29a; 29b; 29c), to which the fourth actuator (26a; 26b; 26c) is connected.

## Revendications

1. Dispositif de transmission pour un véhicule automobile, comprenant au moins une unité d'accouplement (S2a, S2b, S2c) qui présente pour relier solidaire en rotation deux éléments d'accouplement (S21a, S22a) une unité d'accouplement par friction (13a, 13b, 13c) et une unité de complémentarité de forme (14a, 14b, 14c) commutée en parallèle avec l'unité d'accouplement par friction (13a, 13b, 13c), comportant un premier actionneur (15a, 15B, 15c) pneumatique et/ou hydraulique destiné à actionner l'unité de complémentarité de forme (14a, 14b, 14c), comportant un second actionneur pneumatique et/ou hydraulique (16a, 16b, 16c) destiné à actionner l'unité d'accouplement par friction (13a, 13b, 13c) et comportant un distributeur (17a, 17b, 17c) destiné à commander le premier actionneur (15a, 15B, 15c) servant à actionner l'unité de complémentarité de forme (14a, 14b, 14c),
le distributeur (17a, 17b, 17c) présentant un raccordement de conduite de commande (18a, 18b, 18c) qui au moins dans un état de fonctionnement est relié au deuxième actionneur (16a, 16b, 16c) servant à actionner l'unité d'accouplement par friction (13a, 13b, 13c) par technique de pression,
**caractérisé en ce que**
le distributeur (17a, 17b, 17c) présentant un second raccordement de conduite de commande (19a, 19b) qui au moins dans un état de fonctionnement est relié au premier actionneur (15a, 15b) servant à actionner l'unité de complémentarité de forme (14a, 14b).

2. Dispositif de transmission selon la revendication 1, **caractérisé en ce que** le distributeur (17a, 17b) présente un distributeur à tiroir ayant deux surfaces de commande associées respectivement à un des raccordements de conduite de commande (18a, 18b, 18c) qui sont orientés dans la même direction.

3. Dispositif de transmission selon la revendication 1 ou 2, **caractérisé en ce que** le distributeur (17a, 17b) présente au moins un troisième raccordement de conduite de commande (20a,20b) et le distributeur à tiroir présente une surface de commande associée au troisième raccord de conduite de commande (2àa, 20b) qui est orienté vers les autres surfaces de commande dans la direction opposée.

4. Dispositif de transmission selon la revendication 3, **caractérisé en ce qu'**une électrovanne et un troisième actionneur (21a) pour actionner une première autre unité d'accouplement (S6a) qui au moins dans un état de fonctionnement est relié selon la technique de pression au troisième raccordement de conduite de commande (20a).

5. Dispositif de transmission selon la revendication 4, **caractérisé en ce que** le distributeur (17a) présente au moins un ressort (24a) dont la force est orientée dans la même direction que celle de la surface de commande qui est associée au troisième raccordement de conduite de commande (20a) du distributeur à tiroir.

6. Dispositif de transmission au moins selon la revendication 5, **caractérisé en ce que** la première autre unité d'accouplement (S6a) est fermée dans un quatrième (V4), un cinquième (V5), un sixième (V6), un septième (V7), un huitième (V8) et un neuvième (V0) rapport de marche avant et l'unité d'accouplement (S2a, S2b, S2c) est fermée dans le huitième (V8) rapport de marche avant, dans le neuvième (V9) rapport de marche avant et dans le rapport de marche arrière (R).

7. Dispositif de transmission selon la revendication 3, **caractérisé par** un système de pression de travail (23b) qui est relié dans au moins un état de fonctionnement selon la technique de pression au troisième raccordement de conduite de commande (20b).

8. Dispositif de transmission au moins selon la revendication 7, **caractérisé en ce que** le distributeur (17b) présente au moins un ressort (25b) dont la force est orientée dans la direction opposée comme la surface de commande du distributeur à tiroir, qui est associé au troisième raccordement de conduite de commande (20b).

9. Dispositif de transmission selon l'une quelconque des revendications précédentes, **caractérisé par** une autre électrovanne (53a) et un autre quatrième actionneur (26a, 36b, 26c) destiné à actionner une autre seconde unité d'accouplement (S1a, S1b, S1c), le distributeur (17a, 17b, 17c) présentant un premier raccordement de conduite de travail (28a, 28b, 28c) auquel est relié le premier actionneur (15a, 15b, 15c) et un second raccordement de conduite de travail (29a, 29b, 29c) auquel est relié le quatrième actionneur (26a, 26b, 26c).
